(19) Europäisches Patentamt
European Patent Office
Office européen des brevets

(11) EP 4 660 910 A1

(12) EUROPEAN PATENT APPLICATION
published in accordance with Art. 153(4) EPC

(43) Date of publication:
**10.12.2025 Bulletin 2025/50**

(21) Application number: **23920035.5**

(22) Date of filing: **28.12.2023**

(51) International Patent Classification (IPC):
***G06Q 10/0637*** *(2023.01)* ***G06Q 50/18*** *(2012.01)*

(52) Cooperative Patent Classification (CPC):
**G06Q 10/0635; G06Q 10/0637; G06Q 40/06; G06Q 50/18; G06Q 50/184**

(86) International application number:
**PCT/JP2023/047316**

(87) International publication number:
**WO 2024/161900 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2023 JP 2023011736**

(71) Applicant: **Alps Alpine Co., Ltd.**
**Tokyo 145-8501 (JP)**

(72) Inventors:
- **NAKAMURA, Maki**
**Tokyo 145-8501 (JP)**
- **ITOH, Akihisa**
**Tokyo 145-8501 (JP)**

(74) Representative: **Maiwald GmbH**
**Engineering**
**Elisenhof**
**Elisenstrasse 3**
**80335 München (DE)**

# (54) INFORMATION PROCESSING DEVICE, METHOD, AND PROGRAM

(57) A technology capable of grasping whether or not research and development investment has produced a yield is provided. The information processing device 1 manages research and development investment. The information processing device 1 includes a determination unit 30 that determines whether an intangible asset resulting from research and development is an innovation or a dry hole according to a set criterion.

FIG.1

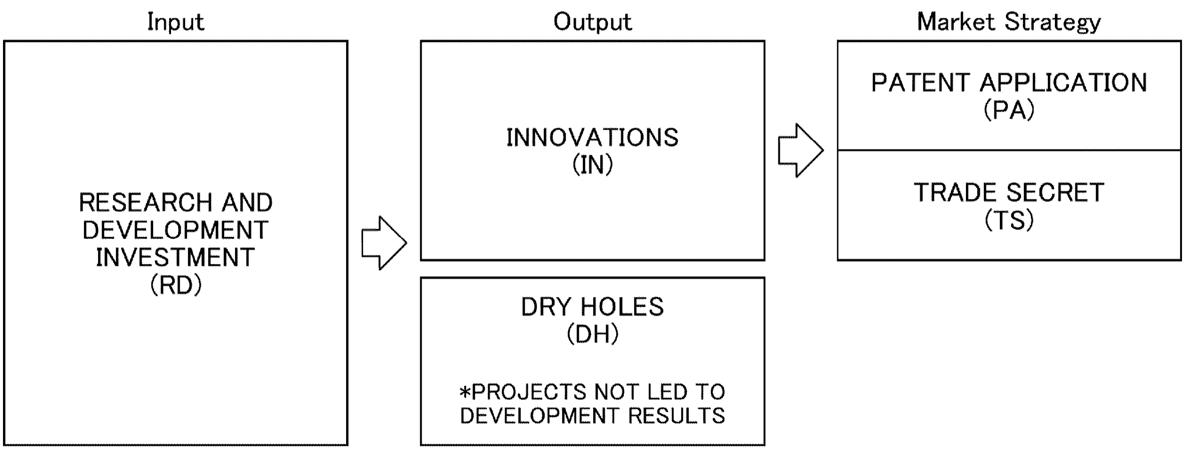




Processed by Luminess, 75001 PARIS (FR)

**Description**

Technical Field

The present disclosure relates to information processing devices, methods, and programs, which manage research and development investment.

Background Art

A technique for evaluating intangible assets in a business entity for operating a business, such as a corporation, has been known (see, for example, Patent Documents 1 to 4).

Citation List

Patent Document

Patent Document 1: Japanese Unexamined Patent Application Publication No. 2005-149400
Patent Document 2: Japanese Unexamined Patent Application Publication No. 2020-166902
Patent Document 3: International Publication No. WO2006/095746
Patent Document 4: Japanese Unexamined Patent Application Publication No. 2007-34761

Summary of Invention

Technical Problem

Intangible assets are created as a result of research and development. Therefore, evaluation of intangible assets is considered to be important for managing research and development investment. However, it has been difficult to determine whether or not the investment into the research and development has produced a yield according to the existing techniques for evaluating intangible assets.

Accordingly, the present invention aims to provide an information processing device, a method, and a program, which are capable of determining whether or not research and development investment has produced a yield.

Solution to Problem

An information processing device according to one embodiment of the present invention is an information processing device that manages research and development investment, and the information processing device includes a determination unit that determines whether an intangible asset resulting from research and development is an innovation or a dry hole according to a set criterion. According to the above configuration, it is possible to determine that an intangible asset resulting from research and development is an innovation or a dry hole, and therefore whether or not research and development investment has produced a yield can be grasped.

In one embodiment, the information processing device may further include: an acquisition unit that acquires management information including at least information of reporting organizations, deliberation results, and evaluation values for reports within a business entity; and an arithmetic unit that calculates, for each of the reporting organizations, a negative report ratio that is a ratio of an evaluation value for the reports of a corresponding reporting organization, which have a negative deliberation result, to an evaluation value for all of the reports of the corresponding reporting organization, based on the management information, wherein the determination unit may perform a determination of each of the reporting organizations based on the negative report ratio. According to the above configuration, an organization for which an investment efficiency is not high can be detected based on the reports within the business entity.

In one embodiment, the management information may further include information of periods to which the reports belong, and the arithmetic unit may calculate the negative report ratio in a specific period. According to the above configuration, the period in which an investment efficiency is not high can be examined.

In one embodiment, the arithmetic unit may calculate the negative report ratio according to an equation:

$$DH(Pd, Ogn) = NA(Pd, Ogn)/CT(Pd, Ogn),$$

where Pd is the specific period, Ogn is a reporting organization of a certain number "n" in order when numbers are assigned to the reporting organizations, respectively, CT(Pd, Ogn) is an evaluation value for all of the reports of the reporting organization in the specific period, NA(Pd, Ogn) is an evaluation value for the reports having the negative deliberation result in the specific period, and DH(Pd, Ogn) is the negative report ratio.

In one embodiment, the reports may be reports of a creation, and each of the deliberation results included in the management information may be a deliberation result as to whether or not an application procedure for an industrial property right is carried out for a corresponding report. According to the above configuration, the judgement result of aptness of the corresponding report for filing an application for an industrial property right can be used to grasp whether the research and development investment has produced a yield.

In one embodiment, the determination unit may determine, as a dry hole, a combination of Pd and Ogn satisfying an inequality of DH(Pd, Ogn) > Th represented using a first threshold Th1, a combination of Pd and Ogn up to a second threshold Th2, when a set of {DH(Pd, Og1), DH(Pd, Og2), ..., DH(Pd, Ogn), ...} is sorted in descending order, or both. According to the above configuration, a combination of a specific period and a reporting organization with which the negative report ratio satisfies a set condition can be extracted as a dry hole.

In one embodiment, the determination unit may determine, as the dry hole, a combination of Pd and Ogn satisfying CT(Pd, Ogn) = 0. According to the above configuration, even a combination of a specific period and a reporting organization with which an evaluation value for all of the reports becomes zero, which is difficult to calculate according to the above equation, can be extracted as a dry hole.

In one embodiment, each of the evaluation values for the reports included in the management information may be a number of the reports, and the arithmetic unit may calculate, for each of the reporting organizations, the negative report ratio that is a ratio of a number of the reports of a corresponding reporting organization, which have a negative deliberation result, to a total number of the reports of the corresponding reporting organization. According to the above configuration, the negative report ratio can be calculated by a simple calculation using the number of the reports for a corresponding reporting organization.

In one embodiment, each of the evaluation values for the reports included in the management information may be a development budget of a corresponding reporting organization, and the arithmetic unit may calculate, for each of the reporting organizations, the negative report ratio that is a value obtained by multiplying, by the development budget of the corresponding reporting organization, a ratio of a number of the reports of the corresponding reporting organization, which have a negative deliberation result, to a total number of the reports of the corresponding reporting organization. According to the above configuration, the negative report ratio can be calculated by weighing a development budget of a corresponding reporting organization.

In one embodiment, the evaluation values for the reports included in the management information may be evaluation indices provided on the reports, respectively, and the arithmetic unit may calculate, for each of the reporting organizations, the negative report ratio that is a ratio of the evaluation indices of the reports of a corresponding reporting organization, which have a negative deliberation result, to the evaluation indices of all of the reports of the corresponding reporting organization. According to the above configuration, the negative report ratio can be calculated by weighing the evaluation indices provided on the reports.

In one embodiment, a condition for determining the deliberation result that an application procedure for an industrial property right is not carried out for each of the reports may be at least one selected from the group consisting of a creation pertaining to a corresponding report being incomplete, the creation pertaining to the corresponding report not being novel, the creation pertaining to the corresponding report not having an inventive step, and the creation pertaining to the corresponding report being unnecessary for portfolio management. According to the above configuration, a decision that an application procedure for an industrial property right is not carried out is made when it is determined that there is little possibility for the creation pertaining to the report to have an industrial property right granted, or that acquisition of an industrial property right on the creation pertaining to the report has little value. Thus, a dry hole can be appropriately extracted.

Another embodiment of the information processing device of the present invention is an information processing device that manages targets of reports of inventions within a business entity. The information processing device may include: a setting unit that sets a target value of an application-filing decision ratio and a target value of a report appropriateness ratio in a specific period; an accumulation unit that accumulates application aptness information indicating whether or not a patent application procedure is carried out for a report, and appropriateness information indicating whether or not the report is appropriate; a decision ratio calculation unit that calculates an actual value of the application-filing decision ratio in the specific period based on the application aptness information accumulated; and an appropriateness ratio calculation unit that calculates an actual value of the report appropriateness ratio in the specific period based on the appropriateness information accumulated. According to the above configuration, actual values of the target values for the application-filing decision ratio and the report appropriateness ratio can be managed.

In one embodiment, the application aptness information may be information indicating that a patent application procedure is not carried out when at least one selected from the group consisting of an invention pertaining to the report being incomplete, an invention pertaining to the report not being novel, an invention pertaining to the report not having an inventive step, and an invention pertaining to the report being unnecessary for portfolio management is satisfied. According to the above configuration, a decision that an application procedure for a patent is not carried out is made when it is determined that there is little possibility for the invention pertaining to the report to have a patent granted, or that acquisition of a patent on the invention pertaining to the report has little value. Thus, waste of resources, which is caused by filing an application for an invention that is difficult to be distinguished from the others, can be minimized.

In one embodiment, the appropriateness information may be information indicating that the report is inappropriate when at least one selected from the group consisting of an invention pertaining to the report being incomplete, an invention pertaining to the report not being novel, and an invention pertaining to the report being unnecessary for portfolio management is satisfied. According to the above configuration, the report is determined as being inappropriate when it is determined that there is especially little possibility for the invention pertaining to the report to have a patent granted, or that acquisition of a patent on the invention pertaining to the report has little value. Thus, quality of the reports of each of the reporting organizations can be determined.

A method of yet another embodiment of the present invention is a method of managing research and development investment. The method includes performing, by a computer, a determination step of determining an intangible asset resulting from research and development as an innovation or a dry hole according to a set criterion. According to the above configuration, it is possible to determine that an intangible asset resulting from research and development is an innovation or a dry hole, and therefore whether or not research and development investment has produced a yield can be grasped.

A program of yet another embodiment of the present invention is a program for managing research and development investment. When executed, the program causes a computer to perform a determination step of determining an intangible asset resulting from research and development as an innovation or a dry hole according to a set criterion. According to the above configuration, it is possible to determine that an intangible asset resulting from research and development is an innovation or a dry hole, and therefore whether or not research and development investment has produced a yield can be grasped.

## Advantageous Effects of Invention

According to the present invention, an information processing device, a method, and a problem, which are capable of determining whether or not research and development investment has produced a yield, can be provided.

## BRIEF DESCRIPTION OF DRAWINGS

[Fig. 1] Fig. 1 is a diagram schematically illustrating a concept of the present disclosure.
[Fig. 2] Fig. 2 is a schematic configuration diagram of an investment management device according to a first embodiment.
[Fig. 3] Fig. 3 is a diagram illustrating a first configuration example of the information processing device of Fig. 2.
[Fig. 4] Fig. 4 is a diagram illustrating a second configuration example of the information processing device of Fig. 2.
[Fig. 5] Fig. 5 is a diagram illustrating one example of management information.
[Fig. 6] Fig. 6 is a flowchart illustrating one example of an investment management process executed by the information processing device of Fig. 2.
[Fig. 7] Fig. 7 is a flowchart illustrating one example of a negative-report-ratio calculation process.
[Fig. 8] Fig. 8 is a flowchart illustrating one example of a determination process.
[Fig. 9] Fig. 9 is a diagram illustrating one example of a display screen from the investment management process of Fig. 6.
[Fig. 10] Fig. 10 is a schematic configuration diagram of the information processing device according to a second embodiment.
[Fig. 11] Fig. 11 is a flowchart illustrating one example of a target management process executed by the information processing device of Fig. 10.
[Fig. 12] Fig. 12 is a diagram illustrating one example of a display screen from the target management process of Fig. 11.

## Description of Embodiments

Embodiments of the present disclosure will be described hereinafter with reference to drawings. In the present specification and drawings, the same reference numerals are assigned to the same components having substantially the same function or the same configuration, and redundant description will be omitted.

(Outline of concept of the present disclosure)

First, an outline of the concept of the present disclosure will be described with reference to Fig. 1. To grasp a yield of research and development, a relationship between research and development investment and patent applications has been researched (for example, Setsuo YAMADA, "Research and Development and Patent Application," Economic Bulletin of Senshu University, Vol. 53, No. 1, 41-50, 2018). As illustrated in Fig. 1, the intangible assets (Output) resulting from the research and development investment (Input) are classified into innovations and dry holes. All of research and development activities of a business entity, such as a corporation, are not necessarily successful and do not necessarily end up as innovations. Part of research and development activities ends in failures, and this part may be referred to as a "dry hole." In the present specification, the term "dry hole" is not distinguished by appropriate timing, and refers to an organization that does not achieve an innovation. For successful innovations, patent applications can be filed, trade secrets may be applied, or other methods for protecting intellectual properties may be applied.

The present inventors have focused on the advantageousness, for management of research and development investment, of determining whether an intangible asset resulting from research and development is an innovation or a dry hole. Then, the present inventors have found a method of determining whether an intangible asset is an innovation or a dry hole according to a set criterion. The method of the present disclosure will be described in detail hereinafter.

(Schematic configuration of investment management device)

Fig. 2 is a schematic configuration diagram of an investment management device 1 serving as the information processing device according to the first embodiment. The investment management device 1 manages research and development investment. The investment management device 1 includes an acquisition unit 10, an arithmetic unit 20, a determination unit 30, a generation unit 40, and an output unit 50. The acquisition unit 10, the arithmetic unit 20, the determination unit 30, the generation unit 40, and the output unit 50 can be configured as functional blocks executed by a control unit included in the investment management device 1. The constituent components corresponding to the above functional blocks included in the investment management device 1 can be configured by, as hardware, a circuit block, a memory, or other LSIs, and may be implemented by, as software, system software, one or more programs loaded in a memory, or the like. Accordingly, the above functional blocks can be implemented in various forms by only hardware, only software, or any combination of the foregoing, and the implementation of the above functional blocks is not limited to a particular form.

The acquisition unit 10 acquires management information 11 (see Fig. 3, etc.). The management information 11 includes at least information of reporting organizations, deliberation results, and evaluation values of reports within a business entity. The management information 11 may further include information of periods to which the reports belong. The business entity is an entity that operates a business, such as a corporation. The reports are reports filed by employees or the like of the business entity in connection with research and development. Examples of the reports include reports of creations, reports of technical bulletins, applications for budgets related to a research and development budget, and the like. The reports of creations are, for example, reports of creations of intellectual properties, such as creations of inventions, devices, designs, creative works, and the like. Each of the reporting organizations is an organization that has filed a report, and is one of multiple organizations constituting a business entity, specific projects set up within a business entity, or the like.

Each of the deliberation results is a result of either the report being accepted or the report not being accepted. The deliberation result that indicates the report being accepted may be referred to as "positive," and the deliberation result that indicates the report not being accepted may be referred to as "negative." In the case where the report is a report of a creation related to an industrial property right, such as a creation of an invention, a device, a design, or the like, the deliberation result is a deliberation result as to whether an application procedure for an industrial property right is carried out for the report. A condition for determining the deliberation result that an application procedure of an industrial property right is not carried out is at least one selected from the group consisting of a creation (e.g., an invention) pertaining to the report being incomplete, the creation pertaining to the report not being novel, the creation pertaining to the report not having an inventive step, and the creation pertaining to the report being unnecessary for portfolio management.

The evaluation values are, for example, a number of reports, a development budget for each of the reporting organizations, or evaluation indices provided on reports, respectively, or any combination of the foregoing.

The arithmetic unit 20 calculates, for each of the reporting organizations, a ratio (also referred to as a "negative report ratio" hereinafter) of an evaluation value for the reports of a corresponding reporting organization, which have a "negative" deliberation result, to an evaluation value for all of the reports of the corresponding reporting organization based on the management information 11. The arithmetic unit 20 may calculate the negative report ratio in a specific period.

As described above, each of the evaluation values for the reports may be a number of reports. In this case, the arithmetic unit 20 may calculate, for each of the reporting organizations, the negative report ratio that is a ratio of the number of reports of a corresponding reporting organization, which have a negative deliberation result, to a total number of the reports of the corresponding reporting organization.

As described above, each of the evaluation values for the reports may be a development budget of a corresponding reporting organization. In this case, the arithmetic unit 20 may calculate, for each of the reporting organizations, the negative report ratio that is a value obtained by multiplying, by the development budget of the corresponding reporting organization, a ratio of a number of the reports of the corresponding reporting organization, which have a "negative" deliberation result, to a total number of the reports of the corresponding reporting organization.

As described above, the evaluation values for the reports may be evaluation indices provided on the reports, respectively. In this case, the arithmetic unit 20 may calculate, for each of the reporting organizations, the negative report ratio that is a ratio of the evaluation indices of the reports of a corresponding reporting organization, which have a "negative" deliberation result, to the evaluation indices of all of the reports of the corresponding reporting organization.

The determination unit 30 determines whether an intangible asset resulting from research and development is an innovation or a dry hole according to a set criterion. Specifically, the determination unit 30 performs a determination of each of the reporting organizations based on the negative report ratio calculated by the arithmetic unit 20. The determination unit 30 will be more specifically described later.

The generation unit 40 generates output information based on the calculation result of the arithmetic unit 20 or the determination result of the determination unit 30. The generation unit 40 can generate information suitable for any information transmitting system, such as display information, audio information, print information, or the like.

The output unit 50 outputs the output information generated by the generation unit 40.

As described above, the investment management device 1 includes the determination unit 30 that determines whether an intangible asset resulting from research and development is an innovation or a dry hole according to a set criterion. According to the above configuration, it is possible to determine that an intangible asset resulting from research and development is an innovation or a dry hole, and therefore whether or not research and development investment has produced a yield can be grasped.

Moreover, the investment management device 1 further includes: the acquisition unit 10 that acquires management information 11 including at least information of reporting organizations, deliberation results, and evaluation values for reports within a business entity; and the arithmetic unit 20 that calculates, for each of the reporting organizations, a negative report ratio that is a ratio of an evaluation value for the reports of a corresponding reporting organization, which have a negative deliberation result, to an evaluation value for all of the reports of the corresponding reporting organization, based on the management information 11. The determination unit 30 may perform a determination of each of the reporting organizations based on the negative report ratio. According to the above configuration, an organization for which an investment efficiency is not high can be detected based on the reports within the business entity.

Moreover, in the investment management device 1, the management information 11 may further include information of periods to which the reports belong, and the arithmetic unit 20 may calculate the negative report ratio in a specific period. According to the above configuration, the period in which an investment efficiency is not high can be examined.

Moreover, in the investment management device 1, the reports may be reports of creations, and each of the deliberation results included in the management information 11 may be a deliberation result as to whether or not an application procedure for an industrial property right is carried out for a corresponding report. According to the above configuration, the judgement result of aptness of the corresponding report for filing an application for an industrial property right can be used to grasp whether the research and development investment has produced a yield.

Moreover, in the investment management device 1, each of the evaluation values for the reports included in the management information 11 may be a number of the reports, and the arithmetic unit 20 may calculate, for each of the reporting organizations, the negative report ratio that is a ratio of a number of the reports of a corresponding reporting organization, which have a "negative" deliberation result, to a total number of the reports of the corresponding reporting organization. According to the above configuration, the negative report ratio can be calculated by a simple calculation using the number of the reports for a corresponding reporting organization.

Moreover, in the investment management device 1, each of the evaluation values for the reports included in the management information 11 may be a development budget of a corresponding reporting organization, and the arithmetic unit 20 may calculate, for each of the reporting organizations, the negative report ratio that is a value obtained by multiplying, by the development budget of the corresponding reporting organization, a ratio of a number of the reports of the corresponding reporting organization, which have a "negative" deliberation result, to a total number of the reports of the corresponding reporting organization. According to the above configuration, the negative report ratio can be calculated by weighing a development budget of a corresponding reporting organization.

Moreover, in the investment management device 1, the evaluation values for the reports included in the management information 11 may be evaluation indices provided on the reports, respectively, and the arithmetic unit 20 may calculate, for each of the reporting organizations, the negative report ratio that is a ratio of the evaluation indices of the reports of a corresponding reporting organization, which have a negative deliberation result, to the evaluation indices of all of the reports of the corresponding reporting organization. According to the above configuration, the negative report ratio can be calculated by weighing the evaluation indices provided on the reports.

Moreover, in the investment management device 1, a condition for determining the deliberation result that an application procedure for an industrial property right is not carried out for each of the reports may be at least one selected from the group consisting of a creation pertaining to a corresponding report being incomplete, the creation pertaining to the corresponding report not being novel, the creation pertaining to the corresponding report not having an inventive step, and the creation pertaining to the corresponding report being unnecessary for portfolio management. According to the above configuration, a decision that an application procedure for an industrial property right is not carried out is made when it is determined that there is little possibility for the creation pertaining to the report to have an industrial property right granted, or that acquisition of an industrial property right on the creation pertaining to the report has little value. Thus, a dry hole can be appropriately extracted.

(First configuration example of investment management device)

Fig. 3 is a diagram illustrating an investment management device 100 that is a first configuration example of the investment management device 1. The investment management device 100 is coupled to a management information database 3 and a terminal device 4 via a network 2. The investment management device 100, the management information database 3, and the terminal device 4 collectively constitute an investment management system 5 serving as an information processing system. The investment management system 5 is an example in which the investment management device 100 functions as a server, thereby outputting output information from the investment management device 100 to the terminal device 4.

The network 2 includes the internet, at least one wide area network (WAN), at least one metropolitan area network (MAN), at least one wireless network, at least one optical network, or any combination of the foregoing. The wireless network is, for example, an ad hoc network, a cellular network, a wireless local area network (LAN), a satellite communication network, or a terrestrial microwave network.

The investment management device 100 includes a communication unit 110, a control unit 120, and a storage unit 130.

The communication unit 110 includes at least one communication interface. The communication interface may correspond to any communication standard. For example, the communication interface corresponds to a wired LAN standard, a wireless LAN standard, or a mobile communication standard. The communication unit 110 receives data used for operation of the investment management device 100, and transmits data obtained by the operation of the investment management device 100. Specifically, the communication unit 110 receives the management information 11 from the management information database 3 via the network 2. Specifically, the communication unit 110 transmits information, which is output from the output unit 50, to the terminal device 4 via the network 2.

The control unit 120 includes at least one processor, at least one programmable circuit, at least one dedicated circuit, or any combination of the foregoing. The processor is a general-purpose processor such as a central processing unit (CPU), a graphics processing unit (GPU), or the like, or a dedicated processor specialized for a specific processing. The programmable circuit is, for example, a field-programmable gate array (FPGA). The dedicated circuit is, for example, an application specific integrated circuit (ASIC). The control unit 120 executes processing related to operation of the investment management device 100, while controlling each of the units of the investment management device 100.

The control unit 120 implements the functions of the acquisition unit 10, the arithmetic unit 20, the determination unit 30, the generation unit 40, and the output unit 50. The details of functions of the acquisition unit 10, the arithmetic unit 20, the determination unit 30, the generation unit 40, and the output unit 50 are as described above.

The storage unit 130 is, for example, a storage device, such as a hard disk drive (HDD), a flash memory, or the like. The storage unit 130 may be a storage device built in the investment management device 100, or an external storage device connected to the investment management device 100 by a universal serial bus (USB) or the like. The storage unit 130 stores data and programs used for information processing executed by the investment management device 100.

The management information database 3 stores the management information 11. The management information database 3 may be a database of a service provider or the like which provides a service to a business entity, a database of a business entity, or a combination of the foregoing. In response to a request or the like from the investment management device 100, the management information database 3 transmits the management information 11 to the investment management device 100 via the network 2. The investment management device 100 stores the management information 11, which has been transmitted from the management information database 3, in the storage unit 130. The management information database 3 may be a constituent component of the investment management device 100.

The terminal device 4 is a computer having a communication function, and may be, for example, a personal computer (PC), a smart phone, a tablet terminal, or the like. The terminal device 4 includes an output unit, and outputs the information output from the investment management device 100. For example, the terminal device 4 includes a display unit as the output unit. The terminal device 4 receives display information transmitted from the investment management device 100 via the network 2, and displays an image on the display unit based on the received display information. The terminal device 4 may include an input unit, such as a keyboard, a touch panel, or the like. The terminal device 4 may transmit a request for executing information processing to the investment management device 100 based on the command input through the input unit, and may receive display information or the like as a result of the executed information processing.

(Second configuration example of investment management device)

Fig. 4 is a diagram illustrating an investment management device 200 that is a second configuration example of the investment management device 1. The investment management device 200 is coupled to a management information database 3 via a network 2. The investment management device 200 and the management information database 3 collectively constitute an investment management system 6 serving as the information processing system. The investment management system 6 is an example in which the investment management device 200 outputs information, such as display information or the like.

The investment management device 200 includes a communication unit 110, a control unit 120, a storage unit 130, an input unit 240, and a display unit 250.

The input unit 240 includes at least one input interface. The input interface includes, for example, physical keys, capacitive keys, a pointing device, a touch screen disposed integrally with the display unit 250, a camera, light detection and ranging or light imaging detection and ranging (LiDAR), or a microphone. The input unit 240 receives an action of inputting data that is used for operation of the investment management device 200. The input unit 240 may be coupled to the investment management device 200 as an external input device, instead of being disposed within the investment management device 200. As a connection interface, for example, an interface corresponding to a standard of universal serial bus (USB), Bluetooth (registered trademark), or the like can be used.

The input unit 240 transmits the input command to the control unit 120 to cause the control unit 120 to execute information processing.

The display unit 250 is, for example, a liquid crystal display (LCD) or an organic electroluminescence (EL) display. The display unit 250 displays an image based on the display information output from the output unit 50.

(One example of management information)

Fig. 5 is a diagram illustrating one example of the management information 11. As illustrated in Fig. 5, the management information 11 includes information including, for each of reports within a business entity, reported-time information (year and month), a control number, a reporting organization, a deliberation result, and evaluation values. In the example illustrated in Fig. 5, a number of reports, a development budget, and an evaluation index are included as information of evaluation values. In the example illustrated in Fig. 5, a specific period is the fiscal year 2019, specifically, a period from April 2019 to March 2020.

In the column for the number of reports, "1" is input for all of the reports. This means that all of the reports have the same evaluation value when the number of reports is used as an evaluation value. In other words, in the case where the number of reports is used as an evaluation value, all of the reports have the same weighing factor.

A value obtained by dividing the development budget distributed to each reporting organization by the number of reports from a corresponding reporting organization is input in the column for the development budget. For example, the development budget of the fiscal year 2019 for Development Department 1 is 1.2 billion yen, and the number of reports of Development Department 1 in the fiscal year 2019 is 6. Thus, the development budget for each report is 200 million yen. In the case where there are, for example, multiple projects in Development Department 1 and the development budget is allocated to each of the projects, the development budget for each report in each project can be managed in the similar manner as above.

The column for the evaluation index presents a value based on the evaluation, which is provided to each of the reports. For example, the evaluation index may be provided to each of the reports based on a rule uniquely practiced by the business entity. In the case of reports of inventions, for example, the evaluation index may be an index that is used for determining a deliberation result as to whether or not an application procedure for a patent is carried out for a report, such as an importance of the invention, or the like. In the example illustrated in Fig. 5, the evaluation index is represented by a value out of 5 points, and a decision for carrying out an application procedure is made when the evaluation index is 3 points or higher.

(Investment management process)

Fig. 6 is a flowchart illustrating one example of an investment management process executed by the investment management device 1. The acquisition unit 10 acquires management information 11 (step S1).

The arithmetic unit 20 calculates a negative report ratio for each combination of a specific period and a reporting organization based on the management information 11 acquired by the acquisition unit 10 (step S2). The process of step S2 is referred to as a negative-report-ratio calculation process, and details of the negative-report-ratio calculation process will be described later.

The determination unit 30 determines each combination of the specific period and the reporting organization as an innovation or a dry hole based on the negative report ratio calculated by the arithmetic unit 20 (step S3). The process of step S3 is referred to as a determination process, and details of the determination process will be described later.

The generation unit 40 generates output information based on the calculation result of the arithmetic unit 20, the determination result of the determination unit 30, or the like (step S4).

The output unit 50 outputs the output information generated by the generation unit 40 (step S5).

Fig. 7 is a flowchart illustrating one example of the negative-report-ratio calculation process (step S2 of Fig. 6) executed by the arithmetic unit 20. The arithmetic unit 20 determines, for each of multiple reports, a reporting organization, a deliberation result, an evaluation value, and a specific period to which a corresponding report belongs based on the management information 11 acquired by the acquisition unit 10 at step S1 (step S21).

The arithmetic unit 20 selects a combination of the specific period and the reporting organization based on the information specified at step S21 (step S22).

The arithmetic unit 20 calculates an evaluation value for all of the reports of the reporting organization selected at step S22 in the specific period selected at step S22 (step S23).

The arithmetic unit 20 calculates an evaluation value for the reports having a "negative" deliberation result among the reports of the reporting organization selected at step S22 in the specific period selected at step S22 (step S24).

The arithmetic unit 20 calculates, as a negative report ratio, a ratio of the evaluation value for the reports having the "negative" deliberation result, which is calculated at step S24, to the evaluation value for all of the reports, which is calculated at step S23 (step S25).

The arithmetic unit 20 determines whether or not there are any combinations of a specific period and a reporting organization in the management information 11 other than the combination of the specific period and the reporting organization, which has been already selected at step S22 (step S26). In the case where it is determined that there is another combination (Yes at step S26), the arithmetic unit 20 returns back to the process of step S22. In the case where it is determined that there are no other combinations, specifically, the case where the processes of S22 to S25 are performed on all of the combinations (No at step S26), the arithmetic unit 20 ends the negative-report-ratio calculation process.

Note that the arithmetic unit 20 may calculate the negative report ratio according to an equation: $DH(Pd, Ogn) = NA(Pd, Ogn)/CT(Pd, Ogn)$, where Pd is the specific period, Ogn is a reporting organization of a certain number "n" in order when numbers are assigned to the reporting organizations, respectively, CT(Pd, Ogn) is an evaluation value for all of the reports of the reporting organization in the specific period, NA(Pd, Ogn) is an evaluation value for the reports having the negative deliberation result in the specific period, and DH(Pd, Ogn) is the negative report ratio.

Fig. 8 is a flowchart illustrating one example of the determination process (step S3 of Fig. 6) executed by the determination unit 30. The determination unit 30 selects a combination of a specific period and a reporting organization (step S31).

The determination unit 30 determines whether or not the negative report ratio of the combination of the specific period and the reporting organization selected at step S31 satisfies a set condition (step S32). In the case where the negative report ratio is determined as satisfying the set condition (Yes at step S32), the determination unit 30 determines the combination as a dry hole (step S33), and proceeds to a process of step S35. In the case where the negative report ratio is determined as not satisfying the set condition (No at step S32), the determination unit 30 determines the combination as an innovation (step S34), and proceeds to a process of step S35.

The determination unit 30 determines whether or not there are any combinations of a specific period and a reporting organization in the management information 11 other than the combination of the specific period and the reporting organization, which has been already selected at step S31 (step S35). In the case where it is determined that there is another combination (Yes at step S35), the determination unit 30 returns back to the process of step S31. In the case where it is determined that there are no other combinations, specifically, the case where the processes of S32 to S34 are performed on all of the combinations (No at step S35), the determination unit 30 ends the determination process.

Note that the determination unit 30 may determine, as a dry hole, a combination of Pd and Ogn satisfying an inequality of $DH(Pd, Ogn) > Th$ represented using a first threshold Th1, a combination of Pd and Ogn up to a second threshold Th2, when a set of $\{DH(Pd, Og1), DH(Pd, Og2), ..., DH(Pd, Ogn), ...\}$ is sorted in descending order, or both. In other words, in the case where the negative report ratio of the combination is greater than a set threshold, the case where the negative report ratio of the combination is at a predetermined position in order or lower when the negative report ratios of all combinations are sorted in the descending order, or both cases, the determination unit 30 may determine the above combination of the specific period and the reporting organization as a dry hole. According to the above configuration, a combination of a specific period and a reporting organization with which the negative report ratio satisfies a set condition can be extracted as a dry hole.

Note that the determination unit 30 may determine a combination of Pd and Ogn satisfying $CT(Pd, Ogn) = 0$ as a dry hole. According to the above configuration, a combination of a specific period and a reporting organization with which an evaluation value for all of the reports becomes zero, which is difficult to calculate according to the above equation, can be also extracted as a dry hole.

(Display screen example)

Fig. 9 is a diagram illustrating one example of a display screen from the investment management process of Fig. 6. The display screen illustrated in Fig. 6 is one example of a screen displayed by the display unit included in the terminal device 4 illustrated in Fig. 2, the display unit 250 included in the investment management device 200 illustrated in Fig. 3, or the like.

Fig. 9 depicts a bar graph that summarizes the deliberation results of reports of each of Research Department 1, Research Department 2, Development Department 1, and Development Department 2, which are reporting organizations, in a specific period. The vertical axis represents the number of reports serving as an evaluation value. The number of reports is presented in a manner such that the number of the reports having a "negative" deliberation result is represented by a negative value. Fig. 9 depicts a negative application ratio of each of the reporting organizations. Although Fig. 9 does not depict the determination results by the determination unit 30, information indicating the determination result may be displayed. For example, in the case where the determination unit 30 determines the negative report ratio of greater than 50% as a dry hole, only Development Department 2 is determined as a dry hole, and Research Department 1, Research Department 2, and Development Department 1 are determined as innovations. For example, in the case where the determination unit 30 determines the second-highest negative report ratio or higher as a dry hole when the negative report ratios are sorted in the descending order, Research Department 1 and Development Department 2 are determined as dry holes, and Research Department 2 and Development Department 1 are determined as innovations.

(Schematic configuration of target management device)

Fig. 10 is a schematic configuration diagram of a target management device 7 serving as the information processing device according to a second embodiment. The target management device 7 manages targets of reports of inventions within a business entity. The target management device 7 includes a setting unit 60, an accumulation unit 70, a decision ratio calculation unit 80, an appropriateness ratio calculation unit 90, a generation unit 41, and an output unit 51. The setting unit 60, the accumulation unit 70, the decision ratio calculation unit 80, the appropriateness ratio calculation unit 90, the generation unit 41, and the output unit 51 may be configured by functional blocks implemented by a control unit included in the target management device 7. The constituent components corresponding to the above functional blocks included in the target management device 7 can be configured by, as hardware, a circuit block, a memory, or other LSIs, and implemented by, as software, system software, one or more programs loaded in a memory, or the like. Accordingly, the functional blocks can be implemented in various forms by only hardware, only software, or any combination of the foregoing, and the implementation of the above functional blocks is not limited to a particular form.

The setting unit 60 sets a target value of an application-filing decision ratio and a target value of a report appropriateness ratio in a specific period. Each of the target values is set based on input information from an input device or the like. The specific period is as described in the first embodiment, thus redundant description will be omitted. The "application-filing decision ratio in the specific period" is a ratio of the number of the reports having a "positive" deliberation result to a total number of the reports of a corresponding reporting organization in the specific period. In other words, the "application-filing decision ratio in the specific period" is a ratio of the number of the reports of which the application aptness information is "positive" to the total number of the reports of a corresponding reporting organization in the specific period. Details of the application aptness information will be described later. The "target value of the application-filing decision ratio in the specific period" is a value set as a target of the "application-filing decision ratio in the specific period," and is set before the end of the specific period, generally before or at an initial point of the specific period.

The "report appropriateness ratio in the specific period" is a ratio of the number of the reports that are appropriate to the total number of the reports of a corresponding reporting organization in the specific period. In other words, the "report appropriateness ratio in the specific period" is a ratio of the number of the reports of which appropriateness information is "positive" to the total number of the reports of a corresponding reporting organization in the specific period. Details of the appropriateness information will be described later. The "target value of the report appropriateness ratio in the specific period" is a value set as a target of the "report appropriateness ratio in the specific period," and is set before the end of the specific period, generally before or at the initial point of the specific period. Moreover, the "target value of the report appropriateness ratio in the specific period" is set to a value higher than the "target value of the application-filing decision ratio in the specific period."

The accumulation unit 70 accumulates application aptness information indicating whether or not a patent application procedure is carried out for a corresponding report, and appropriateness information indicating whether or not the corresponding report is appropriate. The application aptness information includes information indicating that an application procedure is carried out ("positive") or information indicating that an application is not filed ("negative") for each report. The appropriateness information includes information indicating, for each report, that a corresponding report is appropriate ("positive") or information indicating that a corresponding report is not appropriate ("negative"). The application aptness information and the appropriateness information accumulated in the accumulation unit 70 can be generated based on the above-described deliberation results.

The application aptness information is information indicating that a patent application procedure is not carried out when at least one selected from the group consisting of an invention pertaining to the report being incomplete, an invention pertaining to the report not being novel, an invention pertaining to the report not having an inventive step, and an invention pertaining to the report being unnecessary for portfolio management is satisfied. Specifically, the condition for not carrying out an application procedure in the application aptness information is the same as the condition for determining the deliberation result that an application procedure of a patent is not carried out on a corresponding report in the first embodiment.

The appropriateness information is information indicating that a corresponding report is inappropriate when at least one selected from the group consisting of an invention pertaining to the report being incomplete, an invention pertaining to the report not being novel, and an invention pertaining to the report being unnecessary for portfolio management is satisfied. Specifically, the conditions for not carrying out an application procedure in the application aptness information and the conditions for determining the report as being not appropriate in the appropriateness information are similar to each other, but are different in handling of the case where the invention pertaining to the report does not have an inventive step. In the case where the invention according to the report does not have an inventive step, the application aptness information is "negative," specifically, an application is not filed, but the appropriateness information is "positive," specifically, the report is handled as being appropriate. The reports of the inventions in the business entity are ideally reports of inventions that are highly likely to be patented, and acquisition of such patents brings high value for the business entity. However, the reporting organizations typically belong to a technology division, and it may be difficult to sufficiently examine patentability prior to reports, which is particularly significant in determination of an inventive step. Accordingly, the appropriateness information is information that does not indicate "negative" only because the invention pertaining to the report does not have an inventive step.

The decision ratio calculation unit 80 calculates an actual value of the application-filing decision ratio in the specific period based on the application aptness information accumulated. The decision ratio calculation unit 80 calculates an actual value of the application-filing decision ratio in the specific period after the end of the specific period.

The appropriateness ratio calculation unit 90 calculates an actual value of the report appropriateness ratio in the specific period based on the appropriateness information accumulated. The appropriateness ratio calculation unit 90 calculates an actual value of the report appropriateness ratio in the specific period after the end of the specific period.

The generation unit 41 generates output information based on the target values set by the setting unit 60, the calculation result of the decision ratio calculation unit 80, the calculation result of the appropriateness ratio calculation unit 90, or the like. The generation unit 41 can generate information suitable for any information transmitting system, such as display information, audio information, print information, or the like.

The output unit 51 outputs the output information generated by the generation unit 41.

As described above, the target management device 7 is an information processing device that manages targets of reports of inventions within a business entity. The target management device 7 may include: a setting unit 60 that sets a target value of an application-filing decision ratio and a target value of a report appropriateness ratio in a specific period; an accumulation unit 70 that accumulates application aptness information indicating whether or not a patent application procedure is carried out for a report, and appropriateness information indicating whether or not the report is appropriate; a decision ratio calculation unit 80 that calculates an actual value of the application-filing decision ratio in the specific period based on the application aptness information accumulated; and an appropriateness ratio calculation unit 90 that calculates an actual value of the report appropriateness ratio in the specific period based on the appropriateness information accumulated. According to the above configuration, actual values of the target values for the application-filing decision ratio and the report appropriateness ratio can be managed.

Moreover, in the target management device 7, the application aptness information may be information indicating that a patent application procedure is not carried out when at least one selected from the group consisting of an invention pertaining to the report being incomplete, an invention pertaining to the report not being novel, an invention pertaining to the report not having an inventive step, and an invention pertaining to the report being unnecessary for portfolio management is satisfied. According to the above configuration, a decision that an application procedure for a patent is not carried out is made when it is determined that there is little possibility for the invention pertaining to the report to have a patent granted, or that acquisition of an industrial property right on the invention pertaining to the report has little value. Thus, waste of resources, which is caused by filing an application for an invention that is difficult to be distinguished from the others, can be minimized.

Moreover, in the target management device 7, the appropriateness information may be information indicating that the report is inappropriate when at least one selected from the group consisting of an invention pertaining to the report being incomplete, an invention pertaining to the report not being novel, and an invention pertaining to the report being unnecessary for portfolio management is satisfied. According to the above configuration, the report is determined as being inappropriate when it is determined that there is especially little possibility for the invention pertaining to the report to have a patent granted, or that acquisition of an industrial property right on the invention pertaining to the report has little value. Thus, quality of the reports of each of the reporting organizations can be determined.

(Configuration example of target management device)

The target management device 7 can be configured in the same manner as in the configuration examples of the investment management device 1 illustrated in Figs. 3 and 4. In this case, a setting unit 60, an accumulation unit 70, a decision ratio calculation unit 80, an appropriateness ratio calculation unit 90, a generation unit 41, and an output unit 51 included in the target management device 7 can be configured as functions implemented by a control unit 120. Moreover, information set by the setting unit 60 and information accumulated by the accumulation unit 70 can be stored in a storage unit 130.

(Target management process)

Fig. 11 is a flowchart illustrating one example of a target management process executed by the target management device 7. The setting unit 60 sets a target value of an application-filing decision ratio and a target value of a report appropriateness ratio in a specific period (step S51). The process of step S51 is performed before the end of the specific period, for example, before the specific period or at an initial point of the specific period.

The accumulation unit 70 accumulates application aptness information and appropriateness information for each of reports (step S52). The accumulation unit 70 can accumulate application aptness information and appropriateness information of multiple reports from multiple reporting organizations at any time.

The decision ratio calculation unit 80 calculates an actual value of the application-filing decision ratio in the specific period based on the application aptness information accumulated by the process of step S52 (step S53). The process of step S53 is performed after the end of the specific period.

The appropriateness ratio calculation unit 90 calculates an actual value of the report appropriateness ratio in the specific period based on the appropriateness information accumulated by the process of step S52 (step S54). The process of step S54 is performed after the end of the specific period.

The generation unit 41 generates output information based on the target values set by the setting unit 60, the calculation result of the decision ratio calculation unit 80, the calculation result of the appropriateness ratio calculation unit 90, or the like (step S55).

The output unit 51 outputs the output information generated by the generation unit 41 (step S56).

(Display screen example)

Fig. 12 is one example of a display screen from the target management process of Fig. 11.

Fig. 12 is a graph depicting a target value and actual value of an application-filing decision ratio and a target value and actual value of a report appropriateness ratio of reports from each of reporting organizations in a specific period. The actual values are represented by a stacked bar graph. The target value Ta of the application-filing decision ratio is indicated with a dashed line. The target value Tb of the report appropriateness ratio is indicated with a dash-dotted line.

As depicted in Fig. 12, the actual value of the application-filing decision ratio and the actual value of the report appropriateness ratio are presented in a single stacked bar for each of the reporting organizations. The actual value of the application-filing decision ratio and the actual value of the report appropriateness ratio are each classified into application-filing decided, combined, no inventive step, no novelty, incomplete invention, and unnecessary for patent portfolio management. Among the above categories of the classification, the combined is a category of reports which are determined that filing of an application is performed by combining with another report in the category of the application-filing decided. The application aptness information and the appropriateness information of the combined category are both "positive."

In the example illustrated in Fig. 12, the target value Ta of the application-filing decision ratio is set to 55%. Moreover, the target value Tb of the report appropriateness ratio is set to 80%, which is higher than the target value Ta of the application-filing decision ratio. It can be read from the stacked bar graph that the reporting organization which has not achieved the target value Ta of the application-filing decision ratio, specifically, the reporting organization whose total percentage of the application-filing decided and the combined is less than 55%, is only Department 5 of Research Division. It can be read from the stacked bar graph that the reporting organizations which have not achieved the target value Tb of the report appropriateness ratio, specifically, the reporting organizations whose total percentage of the application-filing decided, the combined, and the no inventive step is less than 80%, are Departments 3, 4, and 5 of Research Division.

As described above, a target management of an entire business entity becomes possible by setting the target value Ta of the application-filing decision ratio and the target value Tb of the report appropriateness ratio as common target values for all of the reporting organizations. Moreover, the reporting organization that does not achieve the target value Ta of the application-filing decision ratio (Department 5 of Research Division in the example illustrated in Fig. 12) may be detected as the above-described dry hole.

The present disclosure is not limited to the configurations specified in the above embodiments, and various modifications can be made.

For example, the investment management device 1 and the target management device 7 may be coupled to each other so as to be able to communicate with each other, or may be configured as one device. Moreover, the management information 11 may be generated based on the output result of the target management device 7, and may be provided to the investment management device 1 so as to be usable.

In association with the above embodiments, the following clauses are further disclosed.

(Clause 1)

An information processing device manages research and development investment. The information processing device includes a determination unit that determines whether an intangible asset resulting from research and development is an innovation or a dry hole according to a set criterion.

(Clause 2)

The information processing device of Clause 1 further includes an acquisition unit and an arithmetic unit. The acquisition unit acquires management information including at least information of reporting organizations, deliberation results, and evaluation values for reports within a business entity. The arithmetic unit calculates, for each of the reporting organizations, a negative report ratio that is a ratio of an evaluation value for the reports of a corresponding reporting organization, which have a negative deliberation result, to an evaluation value for all of the reports of the corresponding reporting organization, based on the management information. The determination unit performs a determination of each of the reporting organizations based on the negative report ratio.

(Clause 3)

In the information processing device of Clause 2, the management information further includes information of periods to which the reports belong, and the arithmetic unit calculates the negative report ratio in a specific period.

(Clause 4)

In the information processing device of Clause 3, the arithmetic unit calculates the negative report ratio according to an equation:

$$DH(Pd, Ogn) = NA(Pd, Ogn)/CT(Pd, Ogn),$$

where Pd is the specific period, Ogn is a reporting organization of a certain number "n" in order when numbers are assigned to the reporting organizations, respectively, CT(Pd, Ogn) is an evaluation value for all of the reports of the reporting organization in the specific period, NA(Pd, Ogn) is an evaluation value for the reports having the negative deliberation result in the specific period, and DH(Pd, Ogn) is the negative report ratio.

(Clause 5)

In the information processing device of Clause 4, the reports are reports of creations, and each of the deliberation results included in the management information is a deliberation result as to whether or not an application procedure for an industrial property right is carried out for a corresponding report.

(Clause 6)

In the information processing device of Clause 5, the determination unit determines, as the dry hole, a combination of Pd and Ogn satisfying an inequality of DH(Pd, Ogn) > Th represented using a first threshold Th1, a combination of Pd and Ogn up to a second threshold Th2, when a set of {DH(Pd, Og1), DH(Pd, Og2), ..., DH(Pd, Ogn), ...} is sorted in descending order, or both.

(Clause 7)

In the information processing device of Clause 6, the determination unit determines, as the dry hole, a combination of Pd and Ogn satisfying CT(Pd, Ogn) = 0.

(Clause 8)

In the information processing device of any one of Clauses 5 to 7, each of the evaluation values for the reports included in the management information is a number of the reports, and the arithmetic unit calculates, for each of the reporting organizations, the negative report ratio that is a ratio of a number of the reports of a corresponding reporting organization, which have a negative deliberation result, to a total number of the reports of the corresponding reporting organization.

(Clause 9)

In the information processing device of any one of Clauses 5 to 8, each of the evaluation values for the reports included in the management information is a development budget of a corresponding reporting organization, and the arithmetic unit calculates, for each of the reporting organizations, the negative report ratio that is a value obtained by multiplying, by the development budget of the corresponding reporting organization, a ratio of a number of the reports of the corresponding reporting organization, which have a negative deliberation result, to a total number of the reports of the corresponding reporting organization.

(Clause 10)

In the information processing device of any one of Clauses 5 to 9, the evaluation values for the reports included in the management information are evaluation indices provided on the reports, respectively, and the arithmetic unit calculates, for each of the reporting organizations, the negative report ratio that is a ratio of the evaluation indices of the reports of a corresponding reporting organization, which have a negative deliberation result, to the evaluation indices of all of the reports of the corresponding reporting organization.

(Clause 11)

In the information processing device of any one of Clause 5 to 10, a condition for determining the deliberation result that an application procedure for an industrial property right is not carried out for each of the reports is at least one selected from the group consisting of a creation pertaining to a corresponding report being incomplete, the creation pertaining to the corresponding report not being novel, the creation pertaining to the corresponding report not having an inventive step, and the creation pertaining to the corresponding report being unnecessary for portfolio management.

(Clause 12)

An information processing device manages targets of reports of inventions within a business entity. The information processing device includes: a setting unit that sets a target value of an application-filing decision ratio and a target value of a report appropriateness ratio in a specific period; an accumulation unit that accumulates application aptness information indicating whether or not a patent application procedure is carried out for a report, and appropriateness information indicating whether or not the report is appropriate; a decision ratio calculation unit that calculates an actual value of the application-filing decision ratio in the specific period based on the application aptness information accumulated; and an appropriateness ratio calculation unit that calculates an actual value of the report appropriateness ratio in the specific period based on the appropriateness information accumulated.

(Clause 13)

In the information processing device of Clause 12, the application aptness information is information indicating that a patent application procedure is not carried out when at least one selected from the group consisting of an invention pertaining to the report being incomplete, an invention pertaining to the report not being novel, an invention pertaining to the report not having an inventive step, and an invention pertaining to the report being unnecessary for portfolio management is satisfied.

(Clause 14)

In the information processing device of Clause 12 or 13, the appropriateness information is information indicating that the report is inappropriate when at least one selected from the group consisting of an invention pertaining to the report being incomplete, an invention pertaining to the report not being novel, and an invention pertaining to the report being unnecessary for portfolio management is satisfied.

(Clause 15)

A method manages research and development investment. The method includes performing, by a computer, a determination step of determining an intangible asset resulting from research and development as an innovation or a dry hole according to a set criterion.

(Clause 16)

A program for managing research and development investment, when executed, causes a computer to perform a determination step of determining an intangible asset resulting from research and development as an innovation or a dry hole according to a set criterion.

INDUSTRIAL APPLICABILITY

The present disclosure relates to an information processing device, a method, and a program, which manage research and development investment.
The present application is based on and claims priority to Japanese Patent Application No. 2023-011736 filed January 30, 2023, the entire contents of which are incorporated herein by reference.

REFERENCE SIGNS LIST

1, 100, 200: investment management device (information processing device)
2: network
3: management information database
4: terminal device
5, 6: investment management system (information processing system)
7: target management device (information processing device)
10: acquisition unit
11: management information
20: arithmetic unit
30: determination unit
40, 41: generation unit
50, 51: output unit
60: setting unit
70: accumulation unit
80: decision ratio calculation unit
90: appropriateness ratio calculation unit
110: communication unit
120: control unit
130: storage unit
240: input unit
250: display unit
Ta: target value of application-filing decision ratio
Tb: target value of report appropriateness ratio

**Claims**

**1.** An information processing device that manages research and development investment, the information processing device comprising:
a determination unit that determines whether an intangible asset resulting from research and development is an innovation or a dry hole according to a set criterion.

**2.** The information processing device according to claim 1, further comprising:

an acquisition unit that acquires management information including at least information of reporting organizations, deliberation results, and evaluation values for reports within a business entity; and
an arithmetic unit that calculates, for each of the reporting organizations, a negative report ratio that is a ratio of an evaluation value for the reports of a corresponding reporting organization, which have a negative deliberation result, to an evaluation value for all of the reports of the corresponding reporting organization, based on the management information,

wherein the determination unit performs a determination of each of the reporting organizations based on the negative report ratio.

**3.** The information processing device according to claim 2,

wherein the management information further includes information of periods to which the reports belong, and the arithmetic unit calculates the negative report ratio in a specific period.

**4.** The information processing device according to claim 3,

wherein the arithmetic unit calculates the negative report ratio according to an equation:

$$DH(Pd, Ogn) = NA(Pd, Ogn)/CT(Pd, Ogn),$$

where Pd is the specific period, Ogn is a reporting organization of a certain number "n" in order when numbers are assigned to the reporting organizations, respectively, CT(Pd, Ogn) is an evaluation value for all of the reports of the reporting organization in the specific period, NA(Pd, Ogn) is an evaluation value for the reports having the negative deliberation result in the specific period, and DH(Pd, Ogn) is the negative report ratio.

**5.** The information processing device according to claim 4,

wherein the reports are reports of creations, and
each of the deliberation results included in the management information is a deliberation result as to whether or not an application procedure for an industrial property right is carried out for a corresponding report.

**6.** The information processing device according to claim 5,

wherein the determination unit determines, as the dry hole,
a combination of Pd and Ogn satisfying an inequality of DH(Pd, Ogn) > Th represented using a first threshold Th1,
a combination of Pd and Ogn up to a second threshold Th2, when a set of {DH(Pd, Og1), DH(Pd, Og2), ..., DH(Pd, Ogn), ...} is sorted in descending order,
or both.

**7.** The information processing device according to claim 6,
wherein the determination unit determines, as the dry hole, a combination of Pd and Ogn satisfying CT(Pd, Ogn) = 0.

**8.** The information processing device according to claim 5,

wherein each of the evaluation values for the reports included in the management information is a number of the reports, and
the arithmetic unit calculates, for each of the reporting organizations, the negative report ratio that is a ratio of a number of the reports of a corresponding reporting organization, which have a negative deliberation result, to a total number of the reports of the corresponding reporting organization.

**9.** The information processing device according to claim 5,

wherein each of the evaluation values for the reports included in the management information is a development budget of a corresponding reporting organization, and
the arithmetic unit calculates, for each of the reporting organizations, the negative report ratio that is a value obtained by multiplying, by the development budget of the corresponding reporting organization, a ratio of a number of the reports of the corresponding reporting organization, which have a negative deliberation result, to a total number of the reports of the corresponding reporting organization.

**10.** The information processing device according to claim 5,

wherein the evaluation values for the reports included in the management information are evaluation indices provided on the reports, respectively, and
the arithmetic unit calculates, for each of the reporting organizations, the negative report ratio that is a ratio of the evaluation indices of the reports of a corresponding reporting organization, which have a negative deliberation result, to the evaluation indices of all of the reports of the corresponding reporting organization.

**11.** The information processing device according to claim 5,
wherein a condition for determining the deliberation result that an application procedure for an industrial property right is not carried out for each of the reports is at least one selected from the group consisting of a creation pertaining to a corresponding report being incomplete, the creation pertaining to the corresponding report not being novel, the creation pertaining to the corresponding report not having an inventive step, and the creation pertaining to the corresponding report being unnecessary for portfolio management.

**12.** An information processing device that manages targets of reports of inventions within a business entity, the information processing device comprising:

a setting unit that sets a target value of an application-filing decision ratio and a target value of a report appropriateness ratio in a specific period;
an accumulation unit that accumulates application aptness information indicating whether or not a patent application procedure is carried out for a report, and appropriateness information indicating whether or not the report is appropriate;
a decision ratio calculation unit that calculates an actual value of the application-filing decision ratio in the specific period based on the application aptness information accumulated; and
an appropriateness ratio calculation unit that calculates an actual value of the report appropriateness ratio in the specific period based on the appropriateness information accumulated.

**13.** The information processing device according to claim 12,
wherein the application aptness information is information indicating that a patent application procedure is not carried out when at least one selected from the group consisting of an invention pertaining to the report being incomplete, an invention pertaining to the report not being novel, an invention pertaining to the report not having an inventive step, and an invention pertaining to the report being unnecessary for portfolio management is satisfied.

**14.** The information processing device according to claim 12,
wherein the appropriateness information is information indicating that the report is inappropriate when at least one selected from the group consisting of an invention pertaining to the report being incomplete, an invention pertaining to the report not being novel, and an invention pertaining to the report being unnecessary for portfolio management is satisfied.

**15.** A method of managing research and development investment, the method comprising:
performing, by a computer, a determination step of determining an intangible asset resulting from research and development as an innovation or a dry hole according to a set criterion.

**16.** A program for managing research and development investment, the program, when executed, causing a computer to perform
a determination step of determining an intangible asset resulting from research and development as an innovation or a dry hole according to a set criterion.

FIG.1

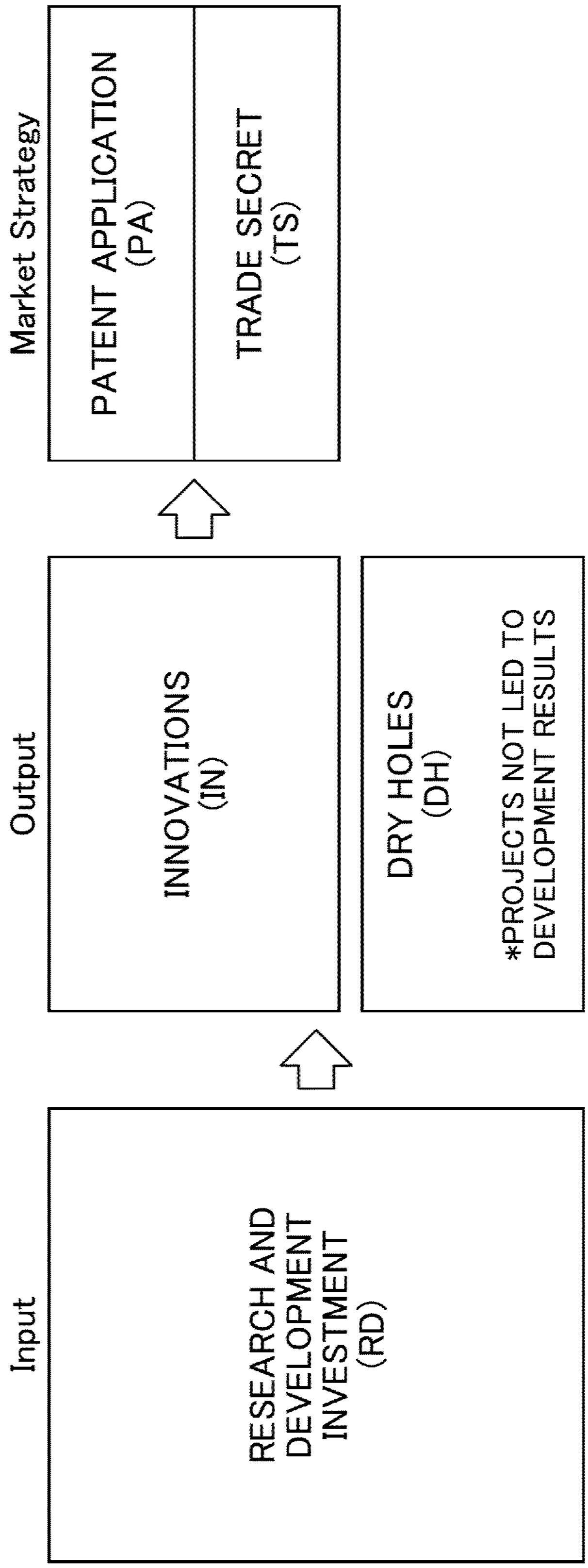
Input
RESEARCH AND DEVELOPMENT INVESTMENT (RD)
Output
INNOVATIONS (IN)
DRY HOLES (DH)
*PROJECTS NOT LED TO DEVELOPMENT RESULTS
Market Strategy
PATENT APPLICATION (PA)
TRADE SECRET (TS)

FIG.2

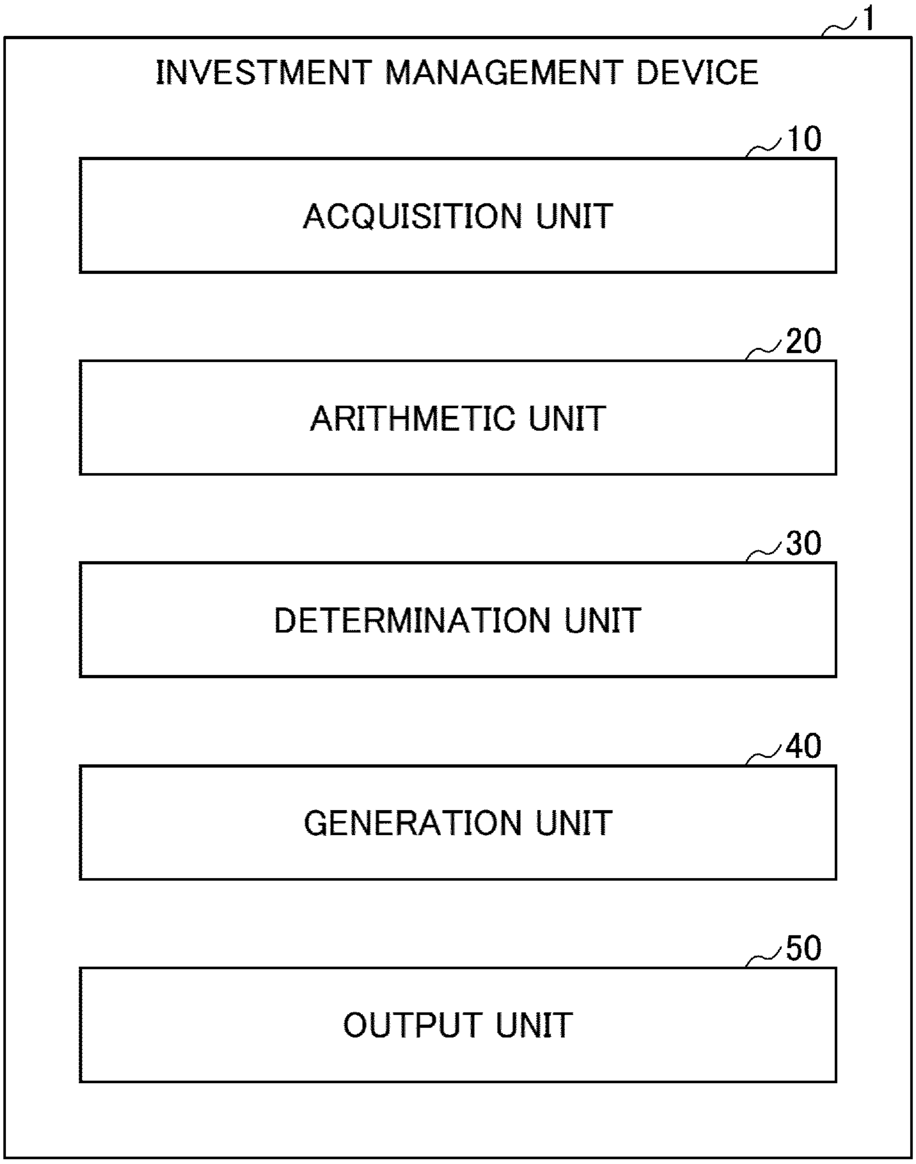
1
INVESTMENT MANAGEMENT DEVICE
10
ACQUISITION UNIT
20
ARITHMETIC UNIT
30
DETERMINATION UNIT
40
GENERATION UNIT
50
OUTPUT UNIT

FIG.3

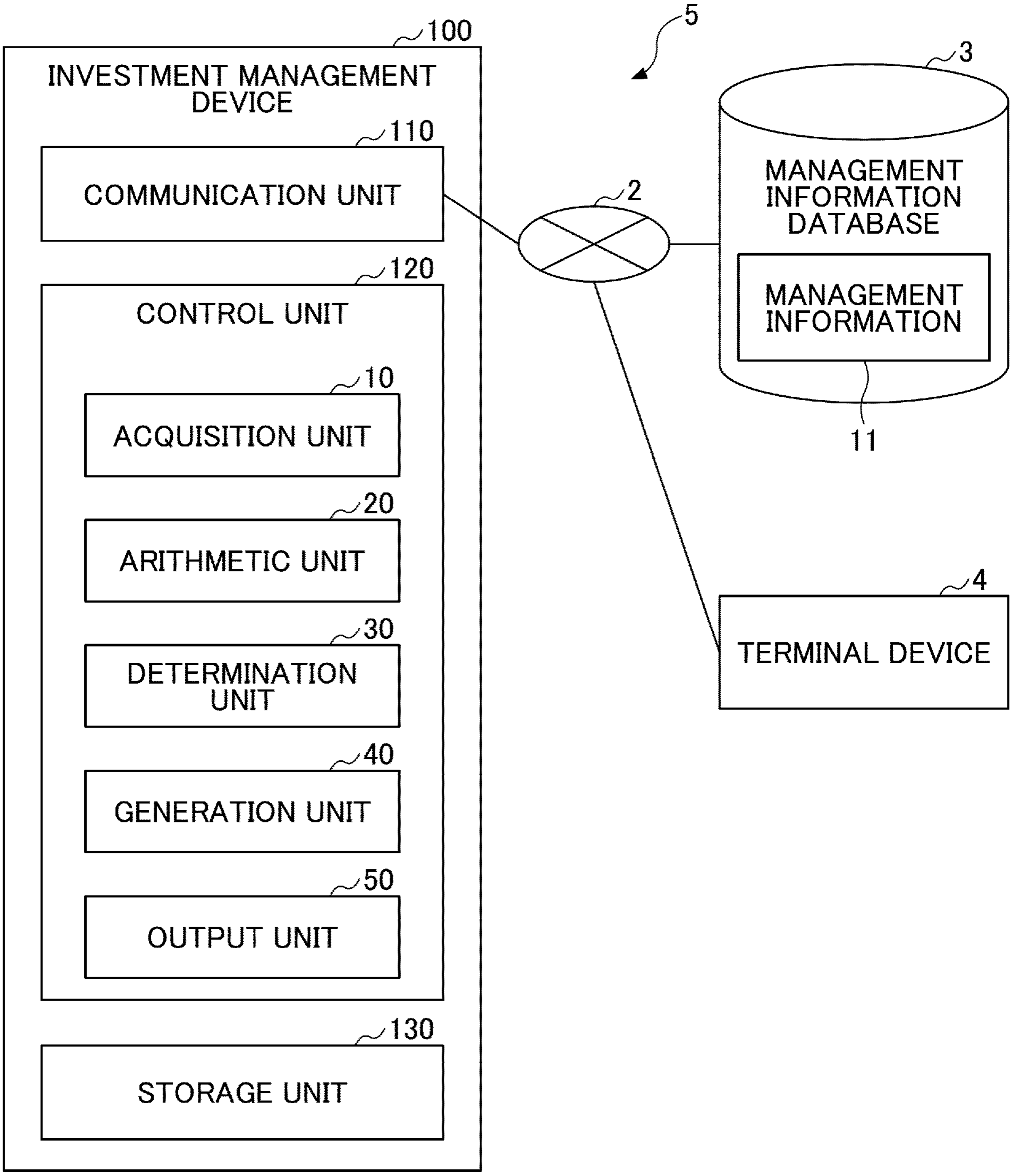
100
INVESTMENT MANAGEMENT DEVICE
110
COMMUNICATION UNIT
120
CONTROL UNIT
10
ACQUISITION UNIT
20
ARITHMETIC UNIT
30
DETERMINATION UNIT
40
GENERATION UNIT
50
OUTPUT UNIT
130
STORAGE UNIT
5
2
3
MANAGEMENT INFORMATION DATABASE
MANAGEMENT INFORMATION
11
4
TERMINAL DEVICE

FIG.4

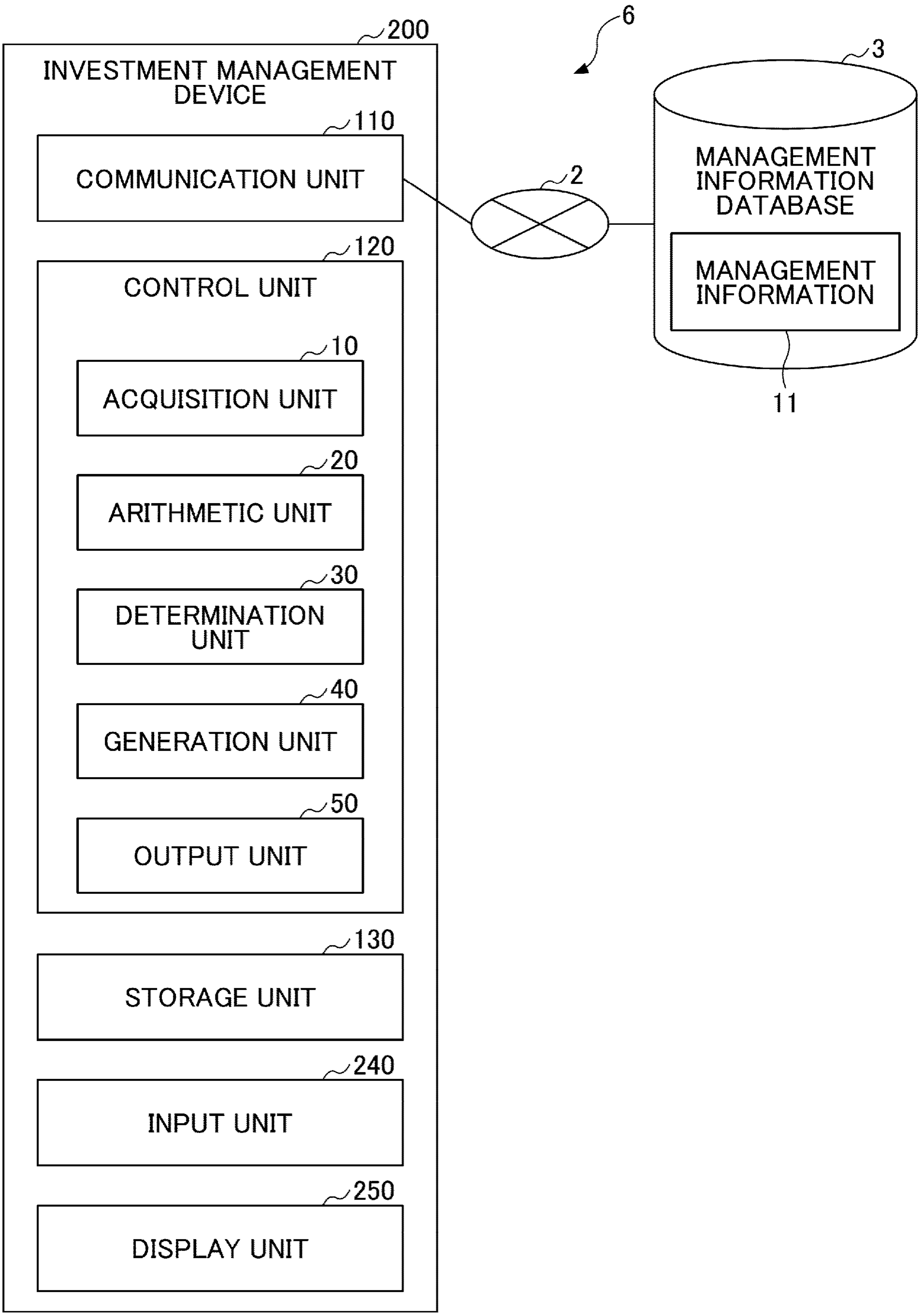
200
INVESTMENT MANAGEMENT DEVICE
110
COMMUNICATION UNIT
120
CONTROL UNIT
10
ACQUISITION UNIT
20
ARITHMETIC UNIT
30
DETERMINATION UNIT
40
GENERATION UNIT
50
OUTPUT UNIT
130
STORAGE UNIT
240
INPUT UNIT
250
DISPLAY UNIT
6
2
3
MANAGEMENT INFORMATION DATABASE
MANAGEMENT INFORMATION
11

# FIG.5

11

| MONTH AND YEAR | CONTROL NO. | REPORTING ORGANIZATION | DELIBERATION RESULT | NUMBER OF REPORTS | DEVELOPMENT BUDGET | EVALUATION INDEX |
|---|---|---|---|---|---|---|
| APRIL 2019 | P19-00001 | DEVELOPMENT DEP. 1 | APPLICATION NOT FILED | 1 | 200 MILLION YEN | 2.1 |
| MAY 2019 | P19-00002 | RESEARCH DEP. 2 | APPLICATION FILED | 1 | 100 MILLION YEN | 3.2 |
| JUNE 2019 | P19-00003 | DEVELOPMENT DEP. 1 | APPLICATION NOT FILED | 1 | 200 MILLION YEN | 1.5 |
| JULY 2019 | P19-00004 | RESEARCH DEP. 2 | APPLICATION FILED | 1 | 100 MILLION YEN | 3.8 |
| AUGUST 2019 | P19-00005 | DEVELOPMENT DEP. 1 | APPLICATION FILED | 1 | 200 MILLION YEN | 4.1 |
| SEPTEMBER 2019 | P19-00006 | RESEARCH DEP. 2 | APPLICATION FILED | 1 | 100 MILLION YEN | 3.2 |
| OCTOBER 2019 | P19-00007 | DEVELOPMENT DEP. 1 | APPLICATION NOT FILED | 1 | 200 MILLION YEN | 1.8 |
| NOVEMBER 2019 | P19-00008 | RESEARCH DEP. 2 | APPLICATION FILED | 1 | 100 MILLION YEN | 3.7 |
| DECEMBER 2019 | P19-00009 | DEVELOPMENT DEP. 1 | APPLICATION NOT FILED | 1 | 200 MILLION YEN | 2.5 |
| JANUARY 2020 | P19-00010 | RESEARCH DEP. 2 | APPLICATION FILED | 1 | 100 MILLION YEN | 4.5 |
| FEBRUARY 2020 | P19-00011 | DEVELOPMENT DEP. 1 | APPLICATION FILED | 1 | 200 MILLION YEN | 4.2 |
| MARCH 2020 | P19-00012 | RESEARCH DEP. 2 | APPLICATION NOT FILED | 1 | 100 MILLION YEN | 2.6 |

FIG.6

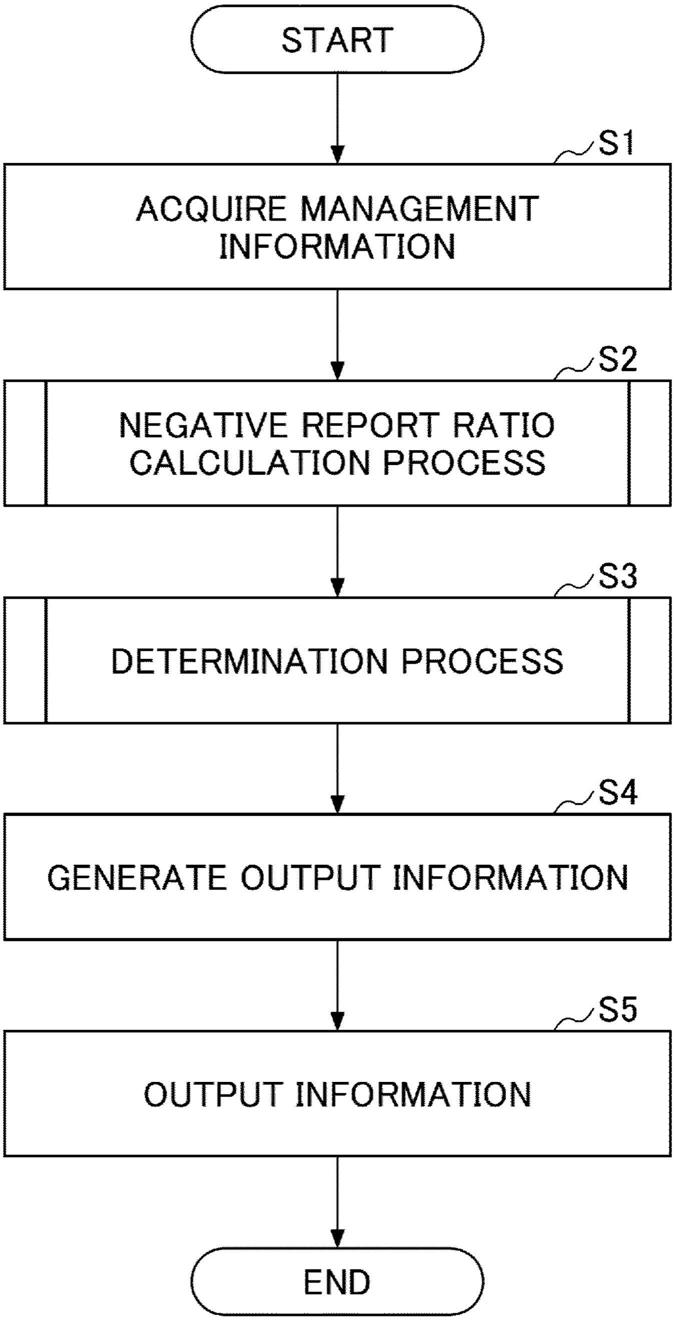
START
S1
ACQUIRE MANAGEMENT INFORMATION
S2
NEGATIVE REPORT RATIO CALCULATION PROCESS
S3
DETERMINATION PROCESS
S4
GENERATE OUTPUT INFORMATION
S5
OUTPUT INFORMATION
END

FIG.7

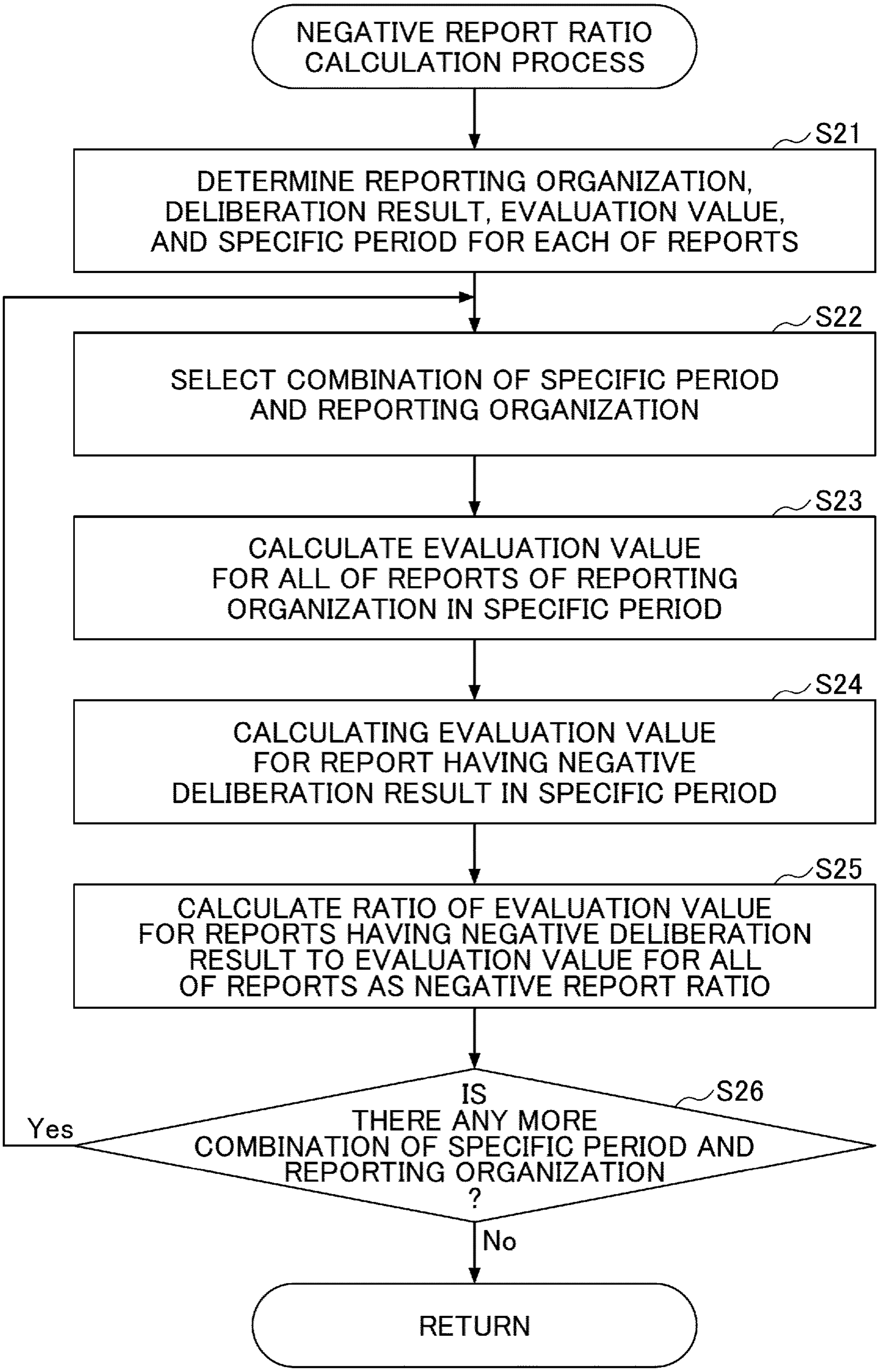
NEGATIVE REPORT RATIO CALCULATION PROCESS
S21
DETERMINE REPORTING ORGANIZATION, DELIBERATION RESULT, EVALUATION VALUE, AND SPECIFIC PERIOD FOR EACH OF REPORTS
S22
SELECT COMBINATION OF SPECIFIC PERIOD AND REPORTING ORGANIZATION
S23
CALCULATE EVALUATION VALUE FOR ALL OF REPORTS OF REPORTING ORGANIZATION IN SPECIFIC PERIOD
S24
CALCULATING EVALUATION VALUE FOR REPORT HAVING NEGATIVE DELIBERATION RESULT IN SPECIFIC PERIOD
S25
CALCULATE RATIO OF EVALUATION VALUE FOR REPORTS HAVING NEGATIVE DELIBERATION RESULT TO EVALUATION VALUE FOR ALL OF REPORTS AS NEGATIVE REPORT RATIO
S26
IS THERE ANY MORE COMBINATION OF SPECIFIC PERIOD AND REPORTING ORGANIZATION ?
Yes
No
RETURN

FIG.8

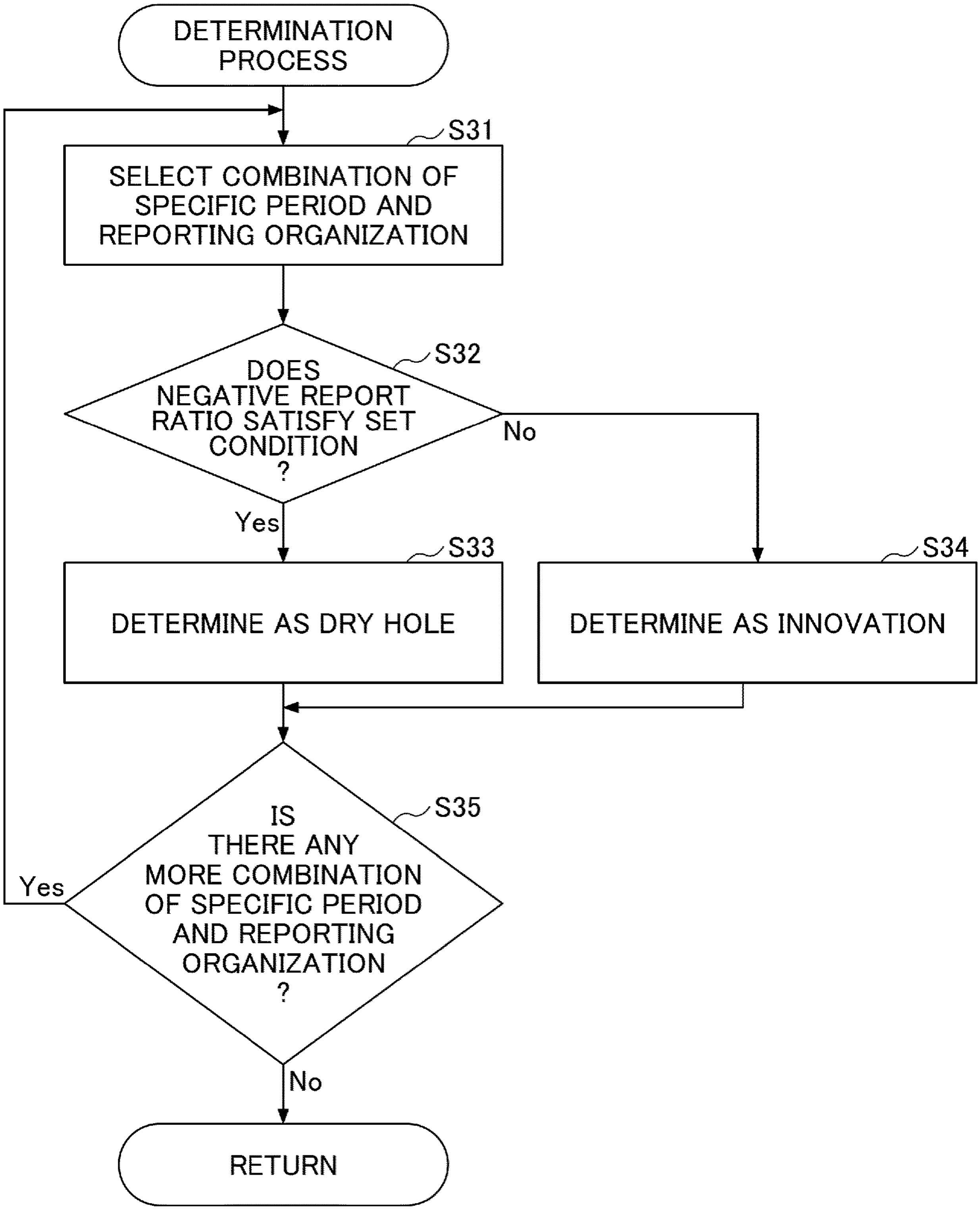
DETERMINATION PROCESS
S31
SELECT COMBINATION OF SPECIFIC PERIOD AND REPORTING ORGANIZATION
S32
DOES NEGATIVE REPORT RATIO SATISFY SET CONDITION ?
No
Yes
S33
DETERMINE AS DRY HOLE
S34
DETERMINE AS INNOVATION
S35
IS THERE ANY MORE COMBINATION OF SPECIFIC PERIOD AND REPORTING ORGANIZATION ?
Yes
No
RETURN

FIG.9

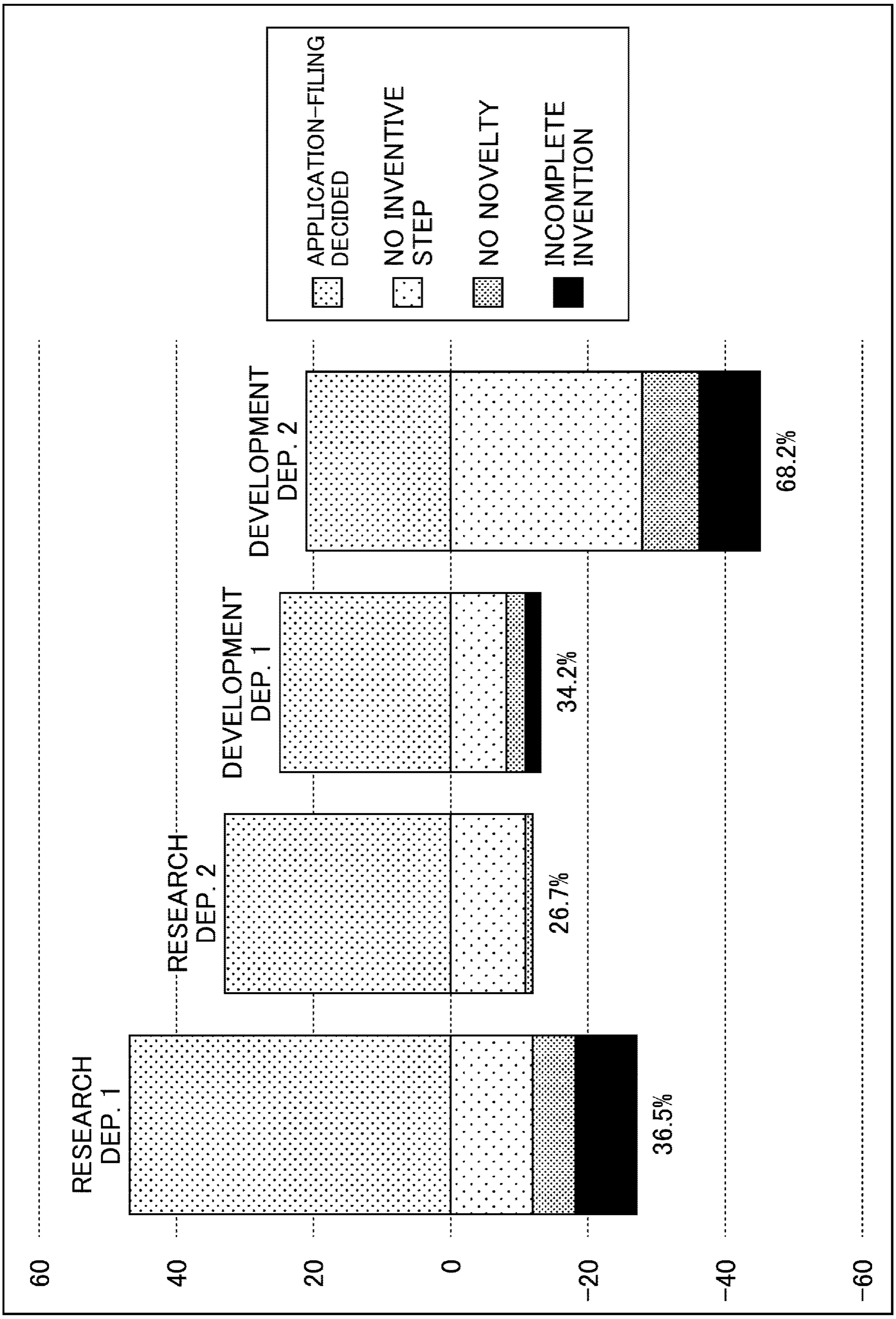
60
40
20
0
-20
-40
-60
RESEARCH DEP. 1
36.5%
RESEARCH DEP. 2
26.7%
DEVELOPMENT DEP. 1
34.2%
DEVELOPMENT DEP. 2
68.2%
APPLICATION-FILING DECIDED
NO INVENTIVE STEP
NO NOVELTY
INCOMPLETE INVENTION

FIG.10

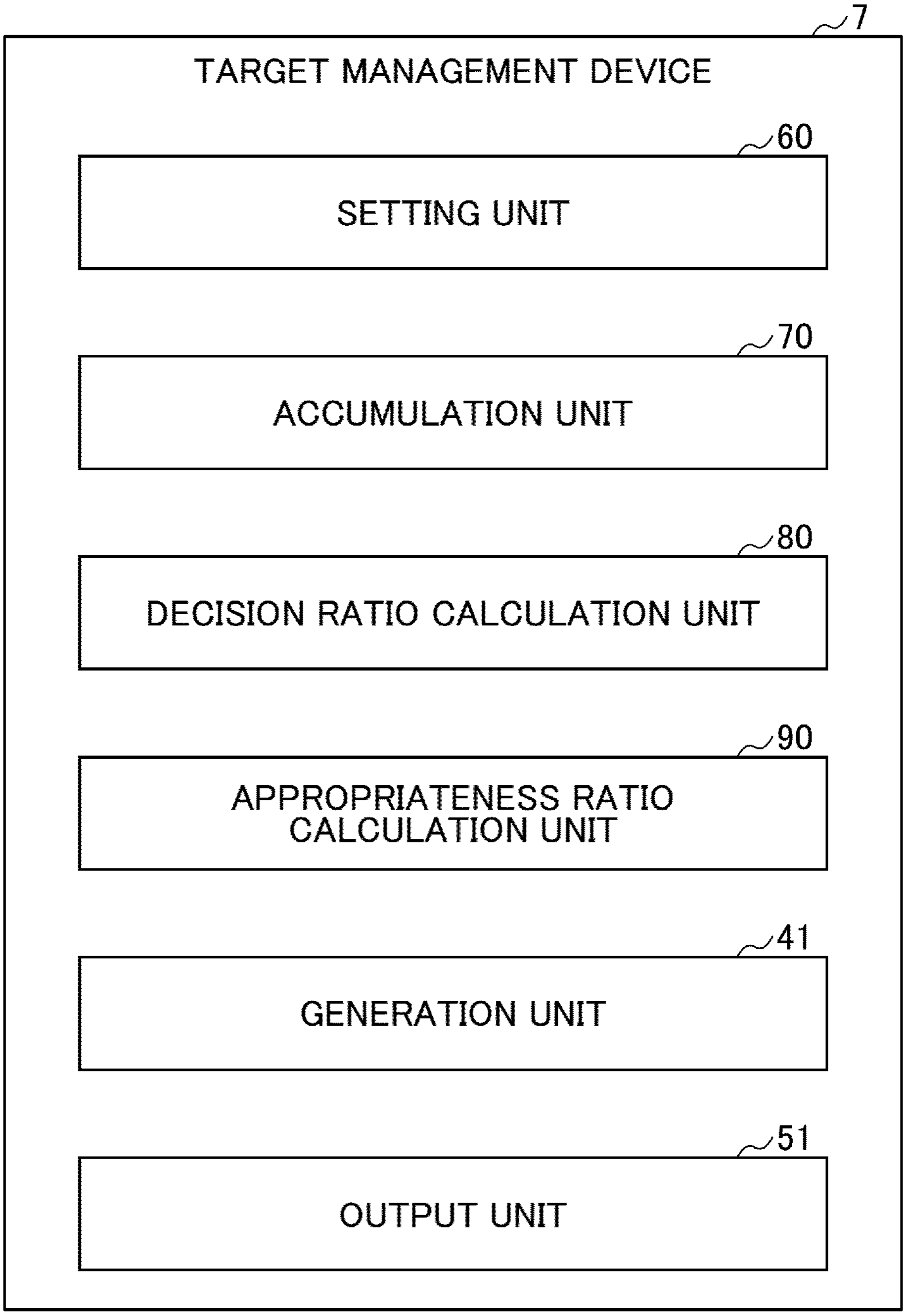
7
TARGET MANAGEMENT DEVICE
60
SETTING UNIT
70
ACCUMULATION UNIT
80
DECISION RATIO CALCULATION UNIT
90
APPROPRIATENESS RATIO CALCULATION UNIT
41
GENERATION UNIT
51
OUTPUT UNIT

FIG.11

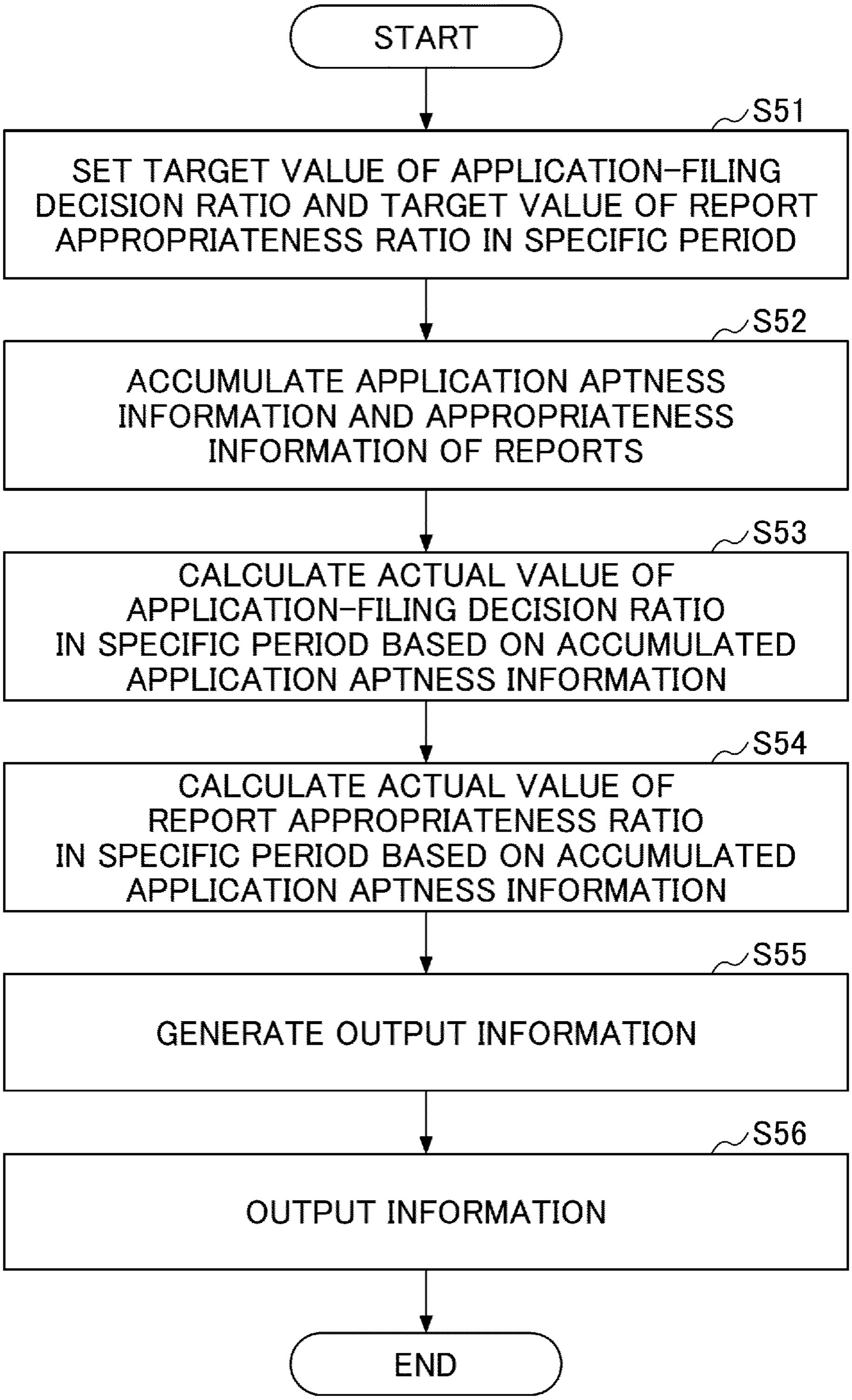
START
S51
SET TARGET VALUE OF APPLICATION-FILING DECISION RATIO AND TARGET VALUE OF REPORT APPROPRIATENESS RATIO IN SPECIFIC PERIOD
S52
ACCUMULATE APPLICATION APTNESS INFORMATION AND APPROPRIATENESS INFORMATION OF REPORTS
S53
CALCULATE ACTUAL VALUE OF APPLICATION-FILING DECISION RATIO IN SPECIFIC PERIOD BASED ON ACCUMULATED APPLICATION APTNESS INFORMATION
S54
CALCULATE ACTUAL VALUE OF REPORT APPROPRIATENESS RATIO IN SPECIFIC PERIOD BASED ON ACCUMULATED APPLICATION APTNESS INFORMATION
S55
GENERATE OUTPUT INFORMATION
S56
OUTPUT INFORMATION
END

FIG.12

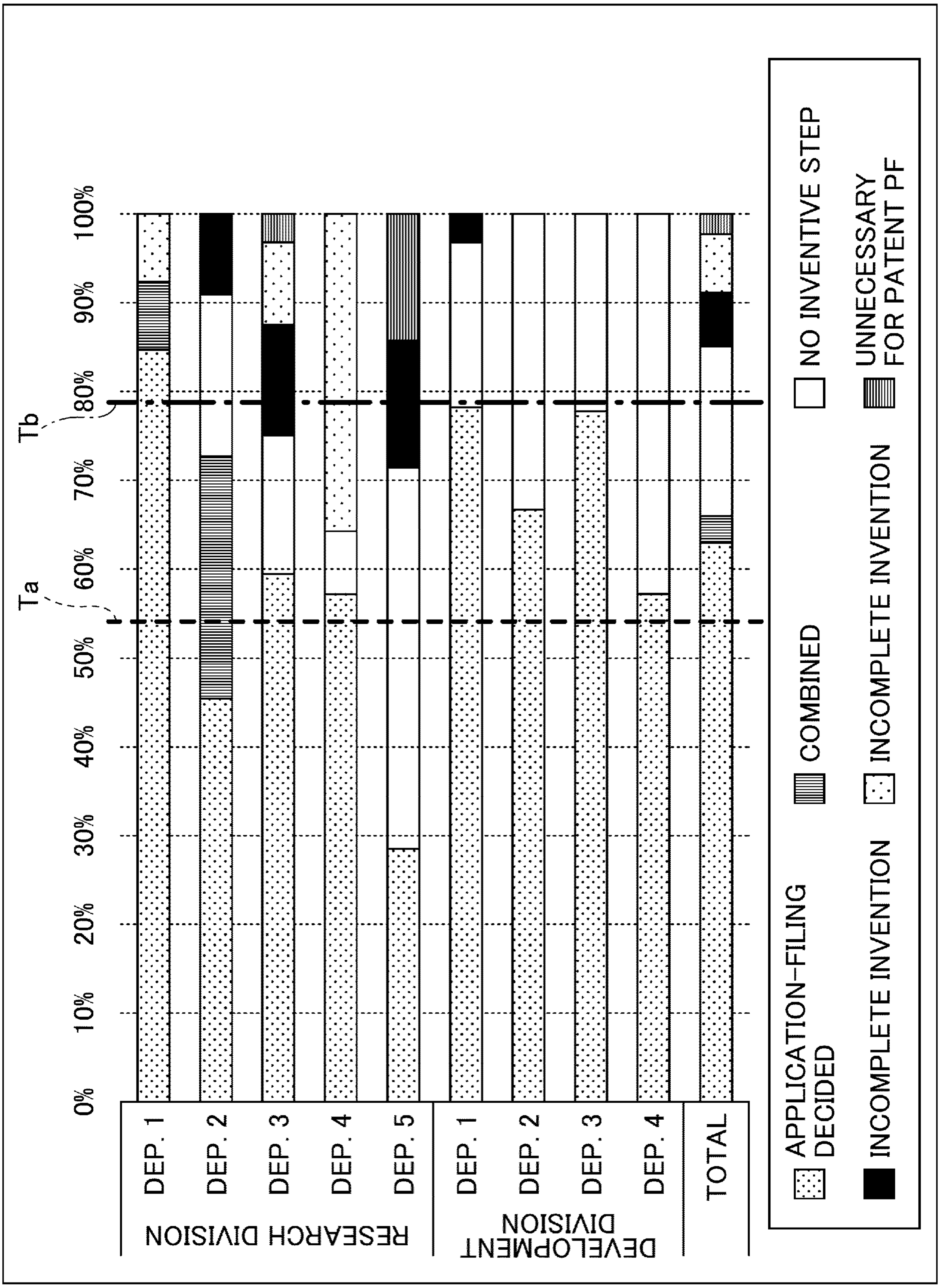
0%
10%
20%
30%
40%
50%
60%
70%
80%
90%
100%
Ta
Tb
RESEARCH DIVISION
DEP. 1
DEP. 2
DEP. 3
DEP. 4
DEP. 5
DEVELOPMENT DIVISION
DEP. 1
DEP. 2
DEP. 3
DEP. 4
TOTAL
APPLICATION-FILING DECIDED
COMBINED
NO INVENTIVE STEP
INCOMPLETE INVENTION
INCOMPLETE INVENTION
UNNECESSARY FOR PATENT PF

**INTERNATIONAL SEARCH REPORT**

International application No.
**PCT/JP2023/047316**

**A. CLASSIFICATION OF SUBJECT MATTER**

***G06Q 10/0637***(2023.01)i; ***G06Q 50/18***(2012.01)i
FI: G06Q10/0637; G06Q50/18 310

According to International Patent Classification (IPC) or to both national classification and IPC

**B. FIELDS SEARCHED**

Minimum documentation searched (classification system followed by classification symbols)

G06Q10/0637; G06Q50/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-20563 A (FUJITSU LIMITED) 28 January 2010 (2010-01-28)<br>paragraphs [0068]-[0071], [0104]-[0106], [0137], [0144]-[0145], fig. 20, 22 | 1, 15-16<br>2-11 |
| Y | JP 2007-102714 A (RAYTECH CORP.) 19 April 2007 (2007-04-19)<br>paragraphs [0047]-[0049] | 2-11 |
| Y | 石井 康之, 知的財産の経済・経営分析入門, 初版, 株式会社白桃書房, 26 March 2009, ISBN978-4-561-24504-9, (ISHII, Yasuyuki. Intellectual Property. first edition. HAKUTO-SHOBO PUBLISHING COMPANY.)<br>pp. 230-231 | 5-14 |
| Y | WO 2006/095747 A1 (INTELLECTUAL PROPERTY BANK CORP.) 14 September 2006 (2006-09-14)<br>paragraphs [0120]-[0126] | 9-10 |
| Y | JP 2001-331599 A (SEIKO INSTR INC.) 30 November 2001 (2001-11-30)<br>paragraphs [0087]-[0093] | 12-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/047316**

**Box No. III Observations where unity of invention is lacking (Continuation of item 3 of first sheet)**

This International Searching Authority found multiple inventions in this international application, as follows:

(Invention 1) Claims 1-11, 15, 16

Claim 1 lacks novelty in light of document 1 (refer to paragraphs [0068]-[0071], [0137], and [0144]-[0145], and fig. 20 and 22), and thus does not have a special technical feature.

However, claims 2-11 dependent on claim 1 have the special technical feature of further comprising: an acquisition unit that acquires management information including at least information regarding a notification-source organization, a discussion result, and an evaluation value, in notification from a business unit; and a calculation unit that calculates, for each notification source organization, a ratio of an evaluation value of a notification that the discussion result is negative to an evaluation value of all the notifications, as a negative notification rate, on the basis of the management information, wherein the determination unit determines the notification source organization on the basis of the negative notification rate.

Claims 15 and 16 have the technical feature identical to claim 1.

Therefore, claims 1-11, 15, and 16 are classified as invention 1.

(Invention 2) Claims 12-14

It cannot be said that claims 12-14 have the special technical feature identical or corresponding to claim 2 dependent on claim 1 classified as invention 1.

Claims 12-14 are not dependent on any one of claims 1-11 classified as invention 1.

Claims 12-14 are not substantially identical to or similarly closely related to any of the claims classified as invention 1.

Therefore, claims 12-14 cannot be classified as invention 1.

Claims 12-14 have the special technical feature of comprising: a setting unit that sets a target value of an application determination rate until a specific period and a target value of a notification appropriateness rate; an accumulation unit that accumulates application possibility information regarding whether or not an application procedure of a patent is performed for notification and appropriateness information regarding whether or not the notification is appropriate; a determination rate calculation unit that calculates an actual value of the application determination rate in the specific period on the basis of the accumulated application possibility information; and an appropriateness rate calculation unit that calculates an actual value of the notification appropriateness rate in the specific period on the basis of the accumulated appropriateness information, and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2023/047316**

| Patent document cited in search report | Publication date (day/month/year) | Patent family member(s) | Publication date (day/month/year) |
|---|---|---|---|
| JP 2010-20563 A | 28 January 2010 | US 2010/0010990 A1<br>paragraphs [0090]-[0093], [0126]-[0128], [0159], [0166]-[0167], fig. 20, 22 | |
| JP 2007-102714 A | 19 April 2007 | (Family: none) | |
| WO 2006/095747 A1 | 14 September 2006 | US 2008/0168005 A1<br>paragraphs [0261]-[0267]<br>EP 1868156 A1<br>KR 10-2007-0110060 A<br>CN 101138004 A | |
| JP 2001-331599 A | 30 November 2001 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005149400 A
- JP 2020166902 A
- WO 2006095746 A
- JP 2007034761 A
- JP 2023011736 A


### Non-patent literature cited in the description


- **SETSUO YAMADA**. Research and Development and Patent Application. *Economic Bulletin of Senshu University*, 2018, vol. 53 (1), 41-50